(19) Europäisches Patentamt
European Patent Office
Office européen des brevets

(11) **EP 2 341 372 A1**

(12) **EUROPEAN PATENT APPLICATION**

(43) Date of publication:
**06.07.2011 Bulletin 2011/27**

(51) Int Cl.:
***G01V 3/32*** *(2006.01)*

(21) Application number: **09252811.6**

(22) Date of filing: **16.12.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicant: **BP Exploration Operating Company Limited**
**Sunbury on Thames, Middlesex TW16 7BP (GB)**

(72) Inventor: **The designation of the inventor has not yet been filed**

(74) Representative: **Collins, Frances Mary**
**BP International Limited**
**Global Patents & Technology Law**
**Chertsey Road**
**Sunbury on Thames**
**Middlesex TW16 7LN (GB)**

(54) **Method for measuring rock wettability**

(57) A method of comparing a secondary oil recovery process with a tertiary oil recovery process, the secondary oil recovery process and the tertiary oil recovery process being applied to a substantially fluid-saturated porous medium containing an oil phase and an aqueous phase, the method comprising using relaxation time measurements in the calculation of a wettability index modification factor for the oil phase or the aqueous phase, thereby comparing the tertiary oil recovery process with the secondary oil recovery process.

Figure 1

**Description**

The present invention relates to the measurement of wettability. In particular, the present invention relates to the measurement of wettability characteristics and/or changes therein of a porous medium having contained therein a fluid, e.g. a mixed-phase fluid comprising two or more phases, at least one of which is a liquid.

In the oil and gas industry, gaining an understanding of the wettability characteristics or wetting condition of a hydrocarbon-bearing, subsurface formation (a "reservoir") may be particularly advantageous. For instance, this understanding may help in the optimisation of field development, since wettability may have an effect on reserve calculation and/or the dynamic behaviour of a reservoir.

Wettability may be defined as the tendency of one fluid to spread on or adhere to a solid surface in the presence of other immiscible fluids.

Thus, for example, wettability may describe the relative preference of a rock to be covered by a certain phase, e.g. water or oil. For example, a rock may be said to be water-wet if the rock has a much greater affinity for water than for oil. Thus, in the case of a water-wet porous rock containing water and oil phases within its pores, substantially all of the internal surface of the pores would be covered with a layer of water. In this case, the water may be termed the "wetting phase".

Conversely, in the case of an oil-wet porous rock, substantially all of the internal surface of the pores would be covered with a layer of oil. In this case, the oil may be termed the "wetting phase".

Similarly, a porous rock of mixed wettability may contain some pores which are water-wet and some which are oil-wet. Also, some regions of an individual pore may be water-wet, while others are oil wet.

In practice, it will be appreciated that extreme water-wetness or oil-wetness is rare in oil-bearing reservoirs.

It should be appreciated, however, that for a two-phase fluid within a porous rock, the wetting phase will cover more pore surface area and have a stronger surface affinity with the pore walls than the non-wetting phase.

In fluid systems comprising a gaseous phase, e.g. gas-liquid systems, it may be safely assumed that gas is not the wetting phase.

The wettability of a porous rock will depend on the type of rock and will also be affected by any minerals present within the pores. For instance, clean sandstone or quartz may be extremely water-wet, while most rock formations of oil-bearing reservoirs typically may be of mixed-wettability. For a reservoir, wettability alteration from the original water wetting state to a mixed wetting state may have occurred after crude oil migrated into a reservoir trap and reduced the water saturation of the reservoir down to the connate water saturation over geological time. The reservoir wettability depends on crude oil composition, connate water chemistry, and mineralogy of the rock surface, as well as temperature, and pressure and saturation history of the reservoir. The initial fluid saturation distribution in an oil-bearing formation is dependent on the equilibrium between capillary forces and gravity forces at the reservoir scale and at the pore scale. The wetting state can vary with pore and pore-throat geometry. During the oil migration process, gravity is insufficient to overcome the large capillary pressure within micropores, and thus typically micropores remain fully connate water saturated, therefore retaining their original water-wet state. While large pores are often invaded by oil, a connate water film on the rock surfaces of the large pores usually remains. The wettability alteration within the large pores depends on the stability of this water film. In extreme conditions, the water film may be stable and fully coats the surface area of the large pores thereby keeping the oil phase from having direct contact with the pore surface. Thus over geological time, the large pores remain water-wet. Alternatively, the entire surface of the large pores may become coated by the oil phase such that the large pores are oil-wet. Typically, the large pore surfaces are partially in contact with both the water phase and the oil phase, and therefore have mixed-wetting characteristics.

Traditionally, wettability has been characterised in the laboratory using either the Amott or US Bureau of Mines (USBM) indices. However, the methods by which these indices are usually determined are intrusive and are very time consuming. Moreover, they cannot be readily transferred to the field.

It is known that nuclear magnetic resonance (NMR) techniques may be used to ascertain information regarding fluids contained within a porous medium. Advantageously, using NMR offers a non-intrusive means for determining in-situ wettability of fluids in reservoir rocks, i.e., the NMR measurement process does not interfere with the fluid distribution within the pores of the rock. Hence, NMR may be applied to monitor ongoing dynamic processes comprising wettability alteration, such as, ageing and secondary and tertiary oil recovery processes.

Proton ($^1$H) NMR may be particularly well suited for studies of fluids containing water and hydrocarbon phases, e.g. water and oil, within a porous medium.

NMR may be used to measure the spin-lattice (longitudinal) relaxation time ($T_1$) and/or the spin-spin (transverse) relaxation time ($T_2$) of the fluid. For instance, proton ($^1$H) NMR spectroscopy measures the relaxation time for protons within the fluid. From these measurements it may be possible to elucidate certain information concerning the fluid and/or the porous medium.

For instance, core samples may be taken for subsequent analysis using land-based NMR equipment.

Alternatively, NMR logging tools may advantageously be deployed downhole. Such tools typically employ so-called low field spectroscopy.

However, they also suffer from certain drawbacks. For instance, they cannot be used in wellbores or sections thereof which are lined with metal casing. Also, current tools typically can only obtain information in the near-wellbore region, e.g. no more than a radial distance of about 4 inches (10 cm) from the wellbore. It is envisaged, however, that future generations of NMR logging tools may be able to obtain information relating to regions further from the wellbore.

Oil may be produced from a reservoir in a variety of stages, which may be classified as primary, secondary and tertiary stages.

In primary oil recovery stage, the natural energy of the reservoir is sufficient to produce oil without any assistance. However only around 10 to 15 percent of the original oil in place of a reservoir is recovered during primary recovery.

In some reservoirs, however, the natural reservoir pressure may not be sufficient to drive oil unaided up a production well to the surface. Therefore, it may be necessary to artificially boost oil production. In this regard, it is known that oil production from a reservoir may be assisted by injection of immiscible fluids, such as water or gas, into the reservoir so as to maintain reservoir pressure, and/or to displace oil towards a production well. Injection of such immiscible fluids generally produces about 20 to 40 percent of the original oil in place.

Where the fluid is unmodified, typically seawater or other readily available water, this process may be classified as being a secondary oil recovery process (alternatively a secondary mode process). In general, such a secondary oil recovery process may be referred to as a water flood or water flooding.

Where the fluid has been treated in some way to modify its properties, this process may be classified as being a tertiary oil recovery process. For instance, tertiary recovery processes may include low salinity water flooding in which a source water such as seawater is treated to reduce its salinity prior to injection into the reservoir and processes in which the to-be-injected fluid comprises one or more specially chosen additives, e.g. chemicals and/or microbes. By appropriately modifying the injection fluid, tertiary oil recovery processes may be used to boost oil production from and/or extend the production life of a reservoir. Typically, tertiary oil recovery processes may displace oil from a reservoir which is not displaced by secondary oil recovery processes. Tertiary recovery processes may often be referred to as enhanced oil recovery (EOR) processes. The EOR techniques offer prospects for ultimate recovery of 30 to 60 percent, or more, of original oil in place.

During the production life of a reservoir different methods of oil recovery may be employed. For instance, initially the reservoir may be produced by a primary recovery method. However, after a while, the reservoir pressure may fall and it may become necessary to utilise secondary oil recovery processes. A period of secondary oil recovery may be followed by one of the EOR processes, in order to maximise production from the reservoir. Of course, the person skilled in the art will appreciate that other sequences are possible: for instance, it may be the case that the reservoir is never produced in primary recovery because the natural reservoir pressure is not high enough; alternatively or additionally, a period of EOR may be applied just after primary recovery, with this EOR process being referred to as a secondary mode of EOR process. In contrast, an EOR process may be carried out after the completion of a secondary oil recovery process, with this EOR process being referred to as a tertiary mode EOR process.

It is a non-exclusive object of the present invention to provide an improved method for determining the wettability of a fluid-saturated porous medium such as a reservoir rock having oil and water phases present within its pores.

It is another non-exclusive object of the present invention to provide a method for determining changes in wettability characteristics of a reservoir, in particular before, during and/or after a secondary or tertiary oil recovery process.

According to a first aspect of the present invention there is provided a method of comparing a secondary oil recovery process with a tertiary oil recovery process, the secondary oil recovery process and the tertiary oil recovery process being applied to a substantially fluid-saturated porous medium containing an oil phase and an aqueous phase, the method comprising:

    (a) providing a first sample of the porous medium, the sample having within the pores thereof a known initial volume of the oil phase;

    (b) measuring a relaxation time for the fluid within the first sample;

    (c) subjecting the first sample to the secondary oil recovery process;

    (d) measuring a relaxation time for the fluid remaining within the first sample after the secondary oil recovery process;

    (e) providing a second sample of the porous medium, the second sample having within the pores thereof a substantially similar known initial volume of the oil phase;

    (f) measuring a relaxation time for the fluid within the second sample;

    (g) subjecting the second sample to the tertiary oil recovery process or, subsequent to step (d) and without carrying out steps (e) and (f), subjecting the first sample to the tertiary oil recovery process;

    (h) measuring a relaxation time for the fluid remaining within the second sample or first sample after the tertiary oil recovery process; and

    (i) using the relaxation time measurements in the calculation of a wettability index modification factor for the oil phase or the aqueous phase, thereby comparing the tertiary oil recovery process with the secondary oil recovery process.

The method may be carried out at ambient conditions in a laboratory. Alternatively, the method may be carried out under reservoir conditions or a laboratory simulation thereof.

The porous medium may be a rock, preferably a rock from a hydrocarbon-bearing formation (a reservoir rock) or a replica thereof. Typical reservoir rocks include sedimentary rocks such as clastic sedimentary rocks and carbonates.

The or each sample of the porous medium may be a plug taken from a core sample. Preferably, where a plurality of plugs is used, the plugs may be drilled in close proximity from the core sample and are therefore expected to have similar rock properties. Such plugs are referred to as "sister plugs".

Alternatively, the or each sample may have been artificially prepared in a laboratory, e.g. the or each sample may comprise a sandpack.

The aqueous phase may comprise brine, fresh water, brackish water or seawater. Preferably, the aqueous phase may be substantially similar in composition to a formation water associated with a reservoir. A suitable aqueous phase may be prepared in the laboratory. Thus, the aqueous phase may comprise a brine solution, which may comprise a formation water or a synthetic formation water.

Where the porous medium is a rock taken from a reservoir that is under primary recovery, the formation water may be connate water i.e. the original water in place in the formation. Connate water may contain a wide range of total dissolved solids (TDS), e.g. from around 100 ppm to 100000 ppm, say around 35000 ppm. Where the rock is taken from a reservoir that is under secondary recovery, the formation water may comprise a mixture of connate water and water that has been injected into the reservoir during secondary recovery, e.g. seawater, brackish water, an aquifer water, surface water such as river or lake water, or a produced water. Typically, seawater may have a TDS-content in the region of 35000 ppm.

The oil phase may comprise live crude oil, stock tank oil (often called "dead" crude oil) and kerosene or other refined oils.

The secondary oil recovery process may comprise a water flood and/or brine imbibition. The water flood and/or brine imbibition may utilise a brine solution. Typically, the brine solution may comprise seawater, brackish water, an aquifer water, a surface water, a produced water, a connate water, a formation water or laboratory-prepared replicas thereof.

The tertiary oil recovery processes may comprise: a low salinity water flood; injection of a fluid containing one or more specially selected agents or additives, e.g. microbes, chemicals, e.g. polymers, alkalis or surfactants; or thermal methods, e.g. hot water or steam injection, or in-situ combustion; or gas injection, e.g. miscible/immiscible gases such as carbon dioxide, hydrocarbon gas or nitrogen gas.

In a low salinity water flood, an aqueous solution is injected into the porous medium, wherein the aqueous solution is of a selected total dissolved solids (TDS) content and/or selected multivalent cation content. Typically, the selected TDS content may be less than 10000 ppm, preferably less than 8000 ppm, for example in the range of 500 to 5000 ppm. Advantageously, the to-be-injected aqueous solution (the "injection water") may be selected to have a lower multivalent cation content than the aqueous phase (the "resident phase") that is contained in the porous medium. For example, the ratio of the multivalent cation content of the injection water to the multivalent cation content of the resident phase is preferably less than 0.9, more preferably, less than 0.8, in particular, less than 0.5.

Where the tertiary oil recovery process comprises injection of a fluid containing one or more specially selected agents or additives, the fluid may comprise an aqueous solution, in which the or each of the agents or additives may be present in a concentration of less than 10000 ppm, e.g. in the range of from 100 to 6000 ppm, preferably from 200 to 5000 ppm.

Suitable microbes may include bacillus, clostridia, pseudomonas, hydrocarbon degrading bacteria, and denitrifying bacteria.

Suitable chemicals may include polymers, surfactants, alkaline materials, or a combination of thereof.

Preferably, the relaxation time measurements may be made using NMR spectroscopy.

Preferably, the relaxation time may be a spin-spin (transverse) relaxation time ($T_2$). Alternatively, the relaxation time may be a spin-lattice (longitudinal) relaxation time ($T_1$).

Preferably, the method may comprise the step of normalizing the measurements by reference to measurements obtained from a porous sample, which sample may be saturated with a single phase, e.g. with water or oil.

Preferably, the method may comprise taking reference or calibration relaxation time measurements for bulk samples of the aqueous phase and/or the oil phase.

In a second aspect of the invention there is provided a method of assessing a change in the wettability of a porous and permeable hydrocarbon-bearing formation in the region surrounding a wellbore that penetrates the formation, the method comprising:

(i) locating an NMR spectrometer within the wellbore at a depth corresponding with an interval of the hydrocarbon-bearing formation;
(ii) measuring a relaxation time for the fluid located within the hydrocarbon-bearing formation;
(iii) optionally, removing the NMR spectrometer from the wellbore;
(iv) injecting a secondary or a tertiary recovery process fluid or an EOR process fluid for a period of time such that a known pore volume or fractional pore volume of the fluid is injected;
(v) optionally shutting in the well for a period of time;
(vi) returning the well back to production and producing and optionally recovering the injected fluids;
(vii) after the injected fluids have been produced, if necessary, re-locating the NMR spectrometer within the wellbore at substantially the same depth as before; and
(viii) measuring a relaxation time for the fluid located within the hydrocarbon-bearing formation.
(ix) optionally repeating steps number (iv) to (viii) with a different recovery fluid to that used in step (iv) originally.

Preferably, the method may be repeated on one or more occasions to measure changes in the wettability characteristics of the formation, e.g. before, during and/or after secondary and/or tertiary oil recovery processes.
Typically, the method of this second aspect of the present invention may be carried out in an injection well, a production well, a test well and/or a newly drilled well.
Optionally, the method of this second aspect of the present invention may be combined with a Single Well Chemical Tracer Test, SWCT test that is designed to measure the in-situ oil saturation (residual oil saturation) after the implemented secondary recovery, tertiary recovery, or EOR process.
When the method of this second aspect of the present invention is combined with a SWCTT, the method is modified by using an aqueous fluid as the injection fluid. The aqueous injection fluid is divided into a first (minor) portion and a second (major) portion. The first portion of the aqueous injection fluid is labelled with a reactive chemical tracer, for example, an ester such as ethyl acetate, that reacts with water during the shut-in period to form a product tracer (for example, an alcohol such as ethanol) that is virtually insoluble in the oil phase that is present in the pores of the formation. Optionally, both the first and second portions of the aqueous injection fluid are labelled with a non-reactive, non-partitioning (material balance) tracer, for example, isopropanol. The amount of the second portion of aqueous injection fluid that is used in step (iv) is typically sufficient to push the first portion of the aqueous injection fluid to a radial distance of at least 5 feet, for example, between 5 to 15 feet from the wellbore. Shutting-in the well in step (v) is essential in order to allow a detectable (measurable) amount of product tracer to form. Typically, the well is shut-in for a period of from one to ten days. Typically, the conversion of the reactive tracer to the product tracer (for example, ester to alcohol conversion) is from 10 to 50%. After, the shut-in period, the well is back-produced and the produced fluid is periodically sampled and immediately analyzed for the content of unreacted ester tracer (e.g. ethyl acetate), the product alcohol tracer (e.g. ethanol) and the optional material balance tracer (e.g. isopropanol). At the start of the back-production step (vi), the unreacted ester tracer and the product alcohol tracer are superimposed at the location that is a radial distance of at least 5 feet from the wellbore. Partitioning of the unreacted ester tracer between the immobile residual oil phase and the mobile water phase delays production of the ester by an increment of volume directly related to the residual oil saturation. The product alcohol tracer, however, is not delayed, and flows back to the well at very nearly the same rate as the water. Since the alcohol does not spend time in the stationary oil phase, it is produced earlier than the ethyl acetate tracer, resulting in a separation between the peak concentrations of the product alcohol tracer and unreacted ester tracer. The residual oil saturation is then calculated using the amount of separation between the reactive ester tracer and the alcohol product tracer. Thus, SWCT test results for formations having high residual oil saturations show a large separation between the product alcohol tracer and the reactive ester tracer while test results for formations having low residual oil saturations show a small separation between the product alcohol tracer and the reactive ester tracer. The optional material balance tracer allows for interpretation of the test results in the event that all of the ester tracer reacts, or if some of the ester is stripped away from the produced aqueous fluid by gas breaking out of the fluid or by gas used during gas-lift operations. The change in wettability index determined using the relaxation time measurements determined in step (viii) may be correlated with the residual oil saturation as determined during the SWCT test.
SWCT tests are described in more detail in, for example, Deans, H.A., and Carlisle, C.T.: "Single-Well Tracer Tests in Complex Pore Systems", paper SPE/DOE 14886, presented at the Fifth Symposium on EOR Tulsa, April 20_23, 1986).
In a third aspect of the invention there is provided a method of assessing a change in the wettability of a porous and permeable hydrocarbon-bearing formation in the region surrounding a new wellbore that penetrates the formation, the change being owing, at least in part, to ingress of drilling mud into the formation, the method comprising:

(i) locating a pre-existing wellbore penetrating the hydrocarbon-bearing formation or a similar formation;
(ii) locating an NMR well logging tool within the pre-existing wellbore at a depth corresponding with a portion of the hydrocarbon-bearing formation;

(iii) measuring a relaxation time for the fluid located within the near wellbore region surrounding the pre-existing wellbore;

(iv) drilling a new wellbore at a new location removed from the pre-existing wellbore, whereby the new wellbore penetrates the hydrocarbon-bearing formation;

(v) locating an NMR spectrometer within the new wellbore at a depth corresponding with a portion of the hydrocarbon-bearing formation;

(vi) measuring a relaxation time for the fluid located within the near wellbore region surrounding the new wellbore; and

(vii) comparing the relaxation time measurements from steps (iii) and (vi) to assess the change in the wettability of the fluid in the near wellbore region surrounding the new wellbore, the change being owing, at least in part, to the ingress of drilling mud into the formation during drilling of the new wellbore.

The NMR well logging tool may be a wireline or logging while drilling tool.

A plurality of new wellbores may be drilled, each using drilling muds, e.g. oil-based drilling muds, having different compositions, e.g. containing surfactants and/or other additives, in order to compare the effect of the drilling muds on the wettability of the formation.

Once enough field data has been obtained, it may be possible to select a more appropriate drilling mud for each subsequently drilled new well.

In a fourth aspect of the invention there is provided a method of tracking the ageing of a section of a fluid-saturated porous medium, wherein the fluid is located within the pore structure of the porous medium and the fluid comprises at least two immiscible components or phases, at least one of which is a liquid, the method comprising:

(i) taking a first measurement of a relaxation time distribution of the fluid within the porous medium;

(ii) taking a second measurement of the relaxation time distribution of the fluid within the porous medium after an interval of time;

(iii) taking one or more further measurements of the relaxation time distribution of the fluid within the porous medium at subsequent intervals of time until the relaxation time distribution is substantially unchanging from one measurement to the next, thereby indicating that the sample is aged completely or at least to an acceptable extent.

Preferably, the two components or phases may comprise an aqueous phase and an oil phase.

The section of porous medium may be a core sample, e.g. from a rock such as a reservoir rock or the like. Alternatively, it may be a sandpack or the like which has been specially prepared, typically in a laboratory.

The measurements of the relaxation time may be carried out at regular or irregular intervals over a period of time. The number, frequency and regularity of the measurements that are taken as well as the period during which they are taken may depend on a great many factors, including the nature of the porous medium and the composition of the fluid. For example, the relaxation time measurements may be made once a day or once every few days.

Preferably, the relaxation time may be measured using an NMR spectrometer. Preferably, the relaxation time may be a transverse spin-spin relaxation time.

After ageing, the section of porous medium may be used in further tests or experiments.

According to another aspect of the present invention there is provided a method of determining wettability distribution characteristics at both pore and field scales of a reservoir, i.e., wettability is determined as functions of both pore size and height above a free water level at a reservoir.

In order that the invention may be more fully understood, it will now be described by way of example only and with reference to the accompanying drawings in which:

Figure 1 shows the $T_2$ relaxation time distributions of a core plug (No. 156) at different fluid saturation conditions;

Figure 2 shows the $T_2$ relaxation time distributions of a core plug (No. 157) at different fluid saturation conditions;

Figure 3 shows an experimental set-up for a first sandpack sample undergoing brine imbibition alongside a second sandpack sample undergoing microbial enhanced oil recovery (MEOR);

Figure 4 shows the variation of the logarithmic mean of $T_2$ for the first sandpack during ageing;

Figure 5 shows the variation of the logarithmic mean of $T_2$ for the second sandpack during ageing;

Figure 6 shows $T_2$ distributions for brine imbibition experiments conducted on the first sandpack;

Figure 7 shows $T_2$ distributions for MEOR experiments conducted on the second sandpack;

Figure 8 is a graph comparing $T_2$ distributions for the first sandpack after brine imbibition and the second sandpack after MEOR;

Figure 9 is a graph showing oil recovery with time from the first sandpack and the second sandpack;

Figure 10 is a graph showing $T_2$ distributions for three sister core plug samples after water floods using different salinity levels;

Figure 11 is a graph showing $T_2$ distributions for two sister core plug samples after water floods using different salinity levels;
Figure 12 shows initial water saturation as a function of the $T_2$ relaxation time for MEOR core plugs;
Figure 13 shows initial water saturation as a function of pore size for MEOR core plugs;
Figure 14 shows water volume distribution as a function of pore size at fully water saturated condition and at irreducible water saturated condition;
Figure 15 shows the $T_2$ relaxation time distributions of various samples.

A fluid-saturated pore within a rock may be divided into two regions, namely a surface region and a bulk region. The surface region comprises a relatively thin layer, e.g. having a thickness of no more than a few molecules, over the internal surface of the pore. The bulk region comprises the remainder of the internal volume of the pore.

It has been found that, typically, the relaxation time for a molecule in the surface region is considerably less than for a molecule within the bulk region. This may be owing to the effect on molecules within the surface region of paramagnetic centres within the pore walls. In the case of proton ($^1$H) NMR, it may also be due in part to reduced rotational speed of the hydrogen protons at the surface.

In porous reservoir rocks, the pores are typically less than about 100 $\mu$m in diameter. Accordingly, the bulk region may occupy a relatively small proportion of an individual pore.

The spin-spin relaxation time for a fluid in a pore may be affected by contributions from three relaxation mechanisms: (i) relaxation of the fluid in the bulk region; (ii) relaxation of the fluid in the surface region; and (iii) relaxation owing to self diffusion of the fluid in the gradient of the applied magnetic field. Generally, it may be difficult to separate the relative contributions of the three mechanisms, particularly when the fluid contains more than one phase, e.g. an aqueous phase and an oil phase.

For a fluid-saturated medium in the case where low field NMR with a short echo time is used, e.g. as may typically be used in oilfield NMR logging, it may be assumed that the contribution to spin-spin relaxation time owing to self diffusion may be negligible, since molecular diffusion in internal magnetic field gradients may be negligible.

Hence, for a 100% water-saturated porous medium, the inverse of the spin-spin relaxation time ($T_2$) of the water phase in a pore in the fast-diffusion limit may be expressed as:

$$\frac{1}{T_{2,W}(S_W=1)} = \rho_{2,W}\frac{A}{V} + \frac{1}{T_{2B,W}} \tag{1}$$

In equation (1), $T_{2,W}(S_W=1)$ is the spin-spin relaxation time of fully water saturated rock, $S_W$ represents water phase saturation, $\rho_{2,W}$ is the spin-spin relaxivity of the water phase, $T_{2B,W}$ is the bulk spin-spin relaxation time of the water phase, A is the surface area of the pores within the porous medium and V is the pore volume.

The water phase typically comprises connate water or the like.

In the case of a 100% water-saturated porous rock, Equation (1) may often be approximated by neglecting the bulk relaxation term. This may be done, since the relaxation time of water within porous rock of a reservoir is much shorter than the relaxation time of bulk water. Therefore:

$$\frac{1}{T_{2,W}(S_W=1)} = \rho_{2,W}\frac{A}{V} \tag{2}$$

The V/A ratio can be used to measure pore size by the following equation:

$$\rho_{2,W}T_{2,W} = V/A = r/k \tag{3}$$

where r is pore body radius, and k is a geometrical constant, which depends on pore shape and is equal to 1, 2, and 3 for flat pores or fractures, cylindrical pores, and spherical pores, respectively.

For a pore throat network of a porous medium, a pore body-to-throat ratio (BTR) may be defined as

$$BTR = \frac{r}{R} \qquad\qquad (4)$$

where r is the radius of a pore body which is connected by a pore throat with radius of R.

BTR can be determined for example by comparing the pore throat size distribution determined by mercury injection experiment and pore body size distribution determined by NMR DDIF (Decay due to Diffusion in Internal Field) or thin-section analysis.

The NMR CPMG (Carr-Purcell-Meiboom-Gill) pulse sequence is the most common method for measuring the $T_2$ relaxation time. The pulse sequence consists of a 90° phase angle pulse followed by a series of m 180° phase angle pulses to generate an echo after each 180° pulse, which forms a train of m echoes as a result (where m is an integer). The time interval between adjacent 180° pulses is the echo time, TE.

For a simple bulk fluid like water, the echo amplitude decays as a single-exponential function of the echo time as given by

$$M(mTE) = M(0)\exp(-mTE/T_{2B,W}) \qquad\qquad (5)$$

where M(mTE), is the transverse magnetization, and $M(0)$ is the signal amplitude that corresponds to the initial transverse magnetization.

A fluid (e.g. water) bearing porous medium is typically comprised of a wide distribution of pore sizes. Consequently, the total NMR signal is the sum of the signals from fluids within all the individual pores of the porous medium. It can be expressed as a multi-exponential decay in a CPMG measurement of transverse magnetization:

$$M(mTE) = \sum_{i=1}^{n} A_i \exp\left(-\frac{mTE}{T_{2,i}}\right) \qquad\qquad (6)$$

where $A_i$ is the signal amplitude of the ith component with characteristic relaxation time $T_{2,i}$.

An inverse Laplace transform of data following Equation (6) will yield the $T_2$ relaxation time distribution. At a fast diffusion limit and weak diffusion coupling regime, the $T_2$ distribution can be linearly converted to a pore-size distribution by Equation (3).

The sum of the signal amplitude (Ai) of all (n) components is equal to the signal amplitude of the initial transverse magnetization as stated in Equation (7):

$$\sum_{i=1}^{n} A_i = M(0) \qquad\qquad (7)$$

The signal amplitude ($A_i$) is directly proportional to pore-volume fraction of the ith component with relaxation time of $T_{2i}$.

The special core analysis process often starts from cleaning reservoir core plugs with solvent to a strongly water wet state. During a primary drainage process (to mimic crude oil migration) such as a drainage capillary pressure experiment in a laboratory, an initially fully water saturated core plug is desaturated by air or oil using either porous plate or centrifuge techniques. For instance when using the porous plate technique with nitrogen gas displacing water, after a displace pressure has been applied and equilibrated to fix the capillary pressure (Pc), the remaining water saturation can be determined by measuring the amount of water produced from the core plug. If the applied pressure exceeds the threshold pressure of a given pore, the nitrogen gas will invade the pore and occupy the centre of the pore with the remaining water coating the surface of the pore as a layer. The pores will remain fully water saturated if the applied pressure does not exceed the threshold pressures of the pores. According to the Young-Laplace equation for the water-air system with zero contact angle the threshold pressure of a radius ($R_t$) of a cylindrical pore throat is given by

$$P_{Ct} = \frac{2\sigma}{R_t} \tag{8}$$

where $\sigma$ is surface tension which is 72mN/m for the air-water system.

In an oil-bearing reservoir, the primary drainage capillary pressure curve governs the initial water and oil saturation above the oil-water contact. During the oil migration process, the capillary pressure is balanced by gravitational forces arising from the density difference between water and oil at the equilibrium condition. Accordingly, the fluid distribution as a function of height above the free water level (H) is:

$$P_C = (\rho_w - \rho_o)gH \tag{9}$$

where $\rho_w$ and $p_o$ are the densities of the water phase and oil phase in a reservoir, respectively, g is the gravitational acceleration, and H is the height above free water level in the reservoir.

At the threshold capillary pressure, the corresponding maximum fully water saturated pore body radius ($r_t$) and the $T_{2,t}$ relaxation time of the water phase are related to the pore throat radius ($R_t$) by

$$r_t = R_t BTR \tag{10}$$

$$T_{2,t} = \frac{R_t BTR}{k\rho_{2,W}} \tag{11}$$

assuming that the thickness of the remaining water layer in the air invaded pores is equal to $R_t$. at the threshold capillary pressure of $P_{Ct}$. Therefore, the initial water saturation ($S_{wi}$) as function of both the pore size and capillary pressure can be determined from

$$S_{wi}(r) = 1 - \left(\frac{r - R_t}{r}\right)^k \quad \text{if r>rt;} \quad \text{or} \quad S_{wi}=1 \text{ if } r{\leq}r_t. \tag{12}$$

where k is the pore shape factor and is equal to 1, 2, and 3 for flat pores or fractures, cylindrical pores, and spherical pores, respectively. The physical boundary condition of $S_{wi}$ is $0 < S_{Wi} {\leq} 1$.

Substituting Equation (3) and Equation (11) into Equation (12) gives

$$S_{wi}(T_2) = 1 - \left(\frac{T_2 - T_{2t}/BTR}{T_2}\right)^k \quad \text{if T>T}_{2t}; \quad \text{or } S_{wi}=1 \text{ if } T_2{\leq}T_{2t}. \tag{13}$$

For a spherical pore shape model where k=3, Equation (12) and Equation (13) can be simplified as Equation (14) and Equation (15), respectively:

$$S_{wi}(r) = 1 - \left(\frac{r - r_t/BRT}{r}\right)^3 \quad \text{if r>rt;} \quad \text{or Swi=1 if } r{\leq}rt. \tag{14}$$

$$S_{wi}(T_2) = 1 - \left( \frac{T_2 - T_{2t}/BTR}{T_2} \right)^3 \quad \text{if } T > T2t; \text{ or } S_{wi}=1 \text{ if } T2 \leq T2t. \tag{15}$$

Equations (14) and (15) can be used to determine initial water saturation as a function of pore size at each capillary pressure by multiplying $S_{wi}(r)$ with $A_i(r)$ from the pore size distribution.

Alternatively, the porous medium may be modeled as regular polygonal tubes for analyzing initial water saturation distribution at the pore scale and its relation to relaxation time $T_2$ distribution during the primary drainage process.

By applying Equation (2) to regular n-sided polygonal tubes (where n is an integer), we find that $T_2$ of a fully water saturated regular polygonal tube is directly proportional to the apothem of the regular polygons if we ignore the bulk relaxation and diffusion relaxation components of $T_2$:

$$T_2 = \frac{R_t}{2\rho_2} \tag{16}$$

Porous rocks are initially fully water saturated and strongly water wetted with a contact angle of zero. For the model of regular polygonal tubes, the capillary threshold pressure is defined by

$$P_{Ct} = \frac{2\sigma}{R_t} \tag{17}$$

where $R_t$ is the apothem of the regular n-sided polygon.

During a primary drainage process, a given pore can be invaded by a non-wetting phase (e.g. oil or air) if the applied pressure just exceeds the threshold capillary pressure defined in Equation (8). Consequently, the non-wetting phase occupies the centre of the pore as a cylinder with radius of $R_t$.

As the applied pressure increases further, more and more water is displaced by the non-wetting phase. Consequently remaining water is in the corners of the pore space and resides as a thin water film coating the pore walls. All the smaller pores whose threshold pressures are larger than the applied pressure cannot be invaded by the non-wetting phase and remain fully water saturated, e.g.:

$$Swi=1 \text{ for } Pc \leq Pct \tag{18}$$

In water invaded pores, the curvature radius (R) of the remaining water in the corners is related to the capillary pressure (Pc) by

$$R = \frac{2\sigma}{P_C} \tag{19}$$

The volume of the water film coating on the surface of pore walls can be ignored; therefore the remaining water saturation at a given capillary pressure can be determined by the following Equation:

$$S_{wi} = \left( \frac{\sigma}{P_C \rho_2 T_2} \right)^2 \left( 1 - \frac{\pi}{n \tan(\pi/n)} \right) \text{ for } Pc > Pct \tag{20}$$

For two phases of water and oil in porous media or oil reservoirs, the initial oil saturation can be determined by Soi=1-Swi.

In a similar manner to Equation (1), for a 100% oil-saturated porous medium, the inverse of the spin-spin relaxation time ($T_2$) of the oil phase in a pore in the fast-diffusion limit may be expressed as:

$$\frac{1}{T_{2,o}(S_O=1)} = \rho_{2,O}\frac{A}{V} + \frac{1}{T_{2B,O}} \qquad (21)$$

In Equation (21), $T_{2,O}(S_O=1)$ is the spin-spin relaxation time of fully oil saturated rock, where So represents oil phase saturation, $\rho_{2,O}$ is the spin-spin relaxivity of the oil phase, $T_{2B,O}$ is the bulk spin-spin relaxation time of the oil phase, A is the surface area of the pores within the porous medium and V is the pore volume.

For a 100% oil-saturated large pore in a porous medium, the inverse of the spin-spin relaxation time ($T_2$) of the oil phase in the pore in the fast-diffusion limit may be expressed as:

$$\frac{1}{T_{2,o,L}(S_O=1)} = \rho_{2,O}\frac{A_L}{V_L} + \frac{1}{T_{2B,O}} \qquad (22)$$

In Equation (22), $A_L$ is the surface area of the large pore within the porous medium and $V_L$ is the volume of the large pore.

After primary drainage, oil invades the large pores in the reservoir. If the invaded oil phase does not contact the surface of the pore walls, the reservoir rocks remain water wet and the oil phase has the bulk relaxation mechanism only. If the oil phase starts to contact the surface of the pore walls, both the surface relaxation mechanism and the bulk relaxation mechanism take effect, and the wettability alteration process occurs. After wettability alteration of a partially oil-saturated porous medium, the inverse of the spin-spin relaxation time ($T_2$) of the oil phase in a large pore in the fast-diffusion limit may be expressed as:

$$\frac{1}{T_{2,o,L}(S_{Oi})} = \rho_{2,Oi}\frac{A_{oiL}}{V_L S_{oiL}} + \frac{1}{T_{2B,O}} \qquad (23)$$

In Equation (23), $T_{2,O,L}(S_{Oi})$ is the spin-spin relaxation time of the oil phase at initial oil saturation of $S_{Oi}$ of a partially oil saturated pore, $S_{OiL}$ represents initial oil phase saturation of the large pore, $\rho_{2,Oi}$ is the spin-spin relaxivity of the oil phase at initial oil phase saturation of $S_{Oi}$, $A_{oiL}$ is the surface area of the large pore contacted by oil phase, and $V_L$ is the volume of the large pore.

The initial water and oil saturation models developed in the present invention can be used to partition the pore size distribution into small pores with initial water saturation of 100% and larger pores initially saturated with water and oil. As wettability alteration during ageing, water flooding and EOR processes mainly occurs in oil bearing large pores, wettability indices for large pores are also formulated.

At initial oil saturation (Soi) condition, the wettability index for the oil phase in a large pore is defined as:

$$WI_{Oi} = \frac{\rho_{2,Oi}A_{Oi}}{\rho_{2,O}A} = \frac{\left[\dfrac{1}{T_{2,O}(Soi)} - \dfrac{1}{T_{2B,O}}\right]S_{Oi}}{\dfrac{1}{T_{2,O}(S_O=1)} - \dfrac{1}{T_{2B,O}}} \qquad (24)$$

At initial oil saturation (Soi) conditions, the wettability index for the oil phase as a function of both pore radius (r) and capillary pressure ($P_C$) is defined as:

$$WI(r,P_C)_{Oi} = \frac{\rho_{2,Oi}(r,P_C)A(r,P_C)_{Oi}}{\rho_{2,O}(r)A(r)} = \frac{\left[\dfrac{1}{T_{2,O}(Soi,r,P_C)} - \dfrac{1}{T_{2B,O}}\right]S(r,P_C)_{Oi}}{\dfrac{1}{T_{2,O}(S_O=1,r)} - \dfrac{1}{T_{2B,O}}} \qquad (25)$$

where the $T_2$ relaxation time as a function of pore size at a given capillary pressure $[T_{2,o}(Soi,r,P_C)]$ can be determined by comparing the $T_2$ relaxation time distributions of bulk crude oil and at initial water and oil saturation conditions before and after ageing. The initial oil saturation as a function of pore size $[S(r,P_C)]$ can be determined by combining developed theoretical models of initial water and initial oil saturation as a function of pore size with the $T_2$ relaxation time distribution at 100% water saturation conditions as well as capillary pressure desaturation experiments.

It is noted that the relaxivity is influenced by surface affinity and the presence of any paramagnetic materials on or near the pore surface. The person skilled in the art will be aware that values for the relaxivity of fluids can be obtained from the literature, though these values may not always be reliably accurate. Additionally or alternatively, relaxivity values can be determined by experiment.

Let us consider a situation in which two fluid-saturated porous samples are taken or prepared, which samples will contain a certain proportion of oil and water within their pores. Oil may be produced from one of the samples using a water flood (or brine imbibition), i.e. a secondary oil recovery process and from the other using a microbial or chemical EOR process, i.e. a tertiary oil recovery process.

In the former case (e.g. water flood), the inverse of the spin-spin relaxation time ($T_2$) of the water phase may be expressed as:

$$\frac{1}{T_{2,W}(Sor1)} = \rho_{2,W1}\frac{A_{W1}}{VS_{W1}} + \frac{1}{T_{2B,W1}} \qquad (26)$$

In Equation (26), $T_{2,W}(S_{or1})$ is the spin-spin relaxation time, $S_{or1}$ denoting a first residual oil saturation, $\rho_{2,w1}$ is the spin-spin relaxivity of the water phase, $T_{2B,W1}$ is the bulk spin-spin relaxation time of the water phase, $A_{W1}$ is the internal surface area of the pores that is in contact with the water phase, $S_{W1}$ is the initial water saturation level and V is the pore volume. In a two-phase system, it will be noted that $S_{W1} = (1-S_{or1})$.

In the latter case (e.g. after microbial EOR, hereinafter referred to as MEOR) the inverse of the spin-spin relaxation time ($T_2$) of the water phase may be expressed as:

$$\frac{1}{T_{2,W}(Sor2)} = \rho_{2,W2}\frac{A_{W2}}{VS_{W2}} + \frac{1}{T_{2B,W2}} \qquad (27)$$

In Equation (27), $T_{2,W}(S_{or2})$ is the spin-spin relaxation time, $S_{or2}$ denoting a second residual oil saturation, $\rho_{2,w2}$ is the spin-spin relaxivity of the water phase, $T_{2B,W2}$ is the bulk spin-spin relaxation time of the water phase, $A_{W2}$ is the internal surface area of the pores that is in contact with the water phase, $S_{W2}$ is the initial water saturation level and V is the pore volume. In a two-phase system, it will be noted that $S_{w2} = (1-S_{or2})$.

Equations (26) and (27) can be normalized by reference to the situation for 100% water saturation (i.e. as described by equation (1) above), to give wettability indices according to the following equations:

$$WI_W = \frac{\rho_{2,W1} A_{W1}}{\rho_{2,W} A} = \frac{\left[\dfrac{1}{T_{2,W}(Sor1)} - \dfrac{1}{T_{2B,W1}}\right] S_{W1}}{\dfrac{1}{T_{2,W}(S_W=1)} - \dfrac{1}{T_{2B,W}}} \qquad (28)$$

Equation (28) gives the wettability index for the water phase in the former case under consideration (water flood or imbibition);

$$WI_{W,EOR} = \frac{\rho_{2,W2} A_{W2}}{\rho_{2,W} A} = \frac{\left[\dfrac{1}{T_{2,W}(Sor2)} - \dfrac{1}{T_{2B,W2}}\right] S_{W2}}{\dfrac{1}{T_{2,W}(S_W=1)} - \dfrac{1}{T_{2B,W}}} \qquad (29)$$

Equation (29) provides the wettability index for the water phase in the latter case under consideration (e.g. MEOR).

In spin-spin relaxation time distribution measurements of fluids within porous media, information regarding the distribution of the fluid within the pores and/or the structure of the pores may often be superimposed on one another. Hence, the above-described normalization is carried out, in order to decouple this superimposed information.

By dividing Equation (29) by Equation (28), an NMR wettability index modification factor (WIMF$_W$) may be derived for the water phase which compares, for example, MEOR with a water flood process. This is shown in Equation (30) below:

$$WIMF_W = \frac{\rho_{2,W2} A_{W2}}{\rho_{2,W1} A_{W1}} = \frac{\left[\dfrac{1}{T_{2,W}(Sor2)} - \dfrac{1}{T_{2B,W2}}\right] S_{W2}}{\left[\dfrac{1}{T_{2,W}(Sor1)} - \dfrac{1}{T_{2B,W1}}\right] S_{W1}} \qquad (30)$$

It should be noted that the definitions provided by Equations (29) and (30) are suitable for enhanced oil recovery processes of secondary or tertiary mode oil recovery processes.

For instance, a sandpack sample could first be subjected to brine imbibition and then to an MEOR process, in which case it may be possible to use the methods of the invention to look for a difference in wettability brought about by the MEOR process.

Similarly, wettability indexes for oil phase after water flood (or imbibition) with residual oil saturation of Sor1 and EOR processes with residual oil saturation of Sor2 can be defined as Equations (31) and (32), respectively:

$$WI_O = \frac{\rho_{2,O1} A_{O1}}{\rho_{2,O} A} = \frac{\left[\dfrac{1}{T_{2,O}(Sor1)} - \dfrac{1}{T_{2B,O}}\right] S_{Or1}}{\dfrac{1}{T_{2,O}(S_O=1)} - \dfrac{1}{T_{2B,O}}} \qquad (31)$$

In Equation (31), $WI_O$ is the wettability index for the oil phase after water flood (or imbibition), $T_{2,o}(S_{or1})$ is the

spin-spin relaxation time, $S_{or1}$ denoting a first residual oil saturation, $\rho_{2,o1}$ is the spin-spin relaxivity of the oil phase at the first residual oil saturation, $T_{2B,O}$ is the bulk spin-spin relaxation time of the oil phase, $A_{o1}$ is the internal surface area of the pores that is in contact with the oil phase, $T_{2,O}(S_O=1)$ is the spin-spin relaxation time, $S_O=1$ represents that the rock is fully saturated with oil phase, $\rho_{2,O}$ is the spin-spin relaxivity of the oil phase, and A is the internal surface area of the pores within the porous medium.

$$WI_{O,EOR} = \frac{\rho_{2,O2}A_{O2}}{\rho_{2,O}A} = \frac{\left[\frac{1}{T_{2,O}(Sor2)} - \frac{1}{T_{2B,O}}\right]S_{Or2}}{\frac{1}{T_{2,O}(S_O=1)} - \frac{1}{T_{2B,O}}} \qquad (32)$$

In Equation (32), $WI_{O,EOR}$ is the wettability index for the oil phase after enhanced oil recovery, $T_{2,o}(S_{or2})$ is the spin-spin relaxation time, $S_{or2}$ denoting a residual oil saturation, $\rho_{2,O2}$ is the spin-spin relaxivity of the oil phase at the residual oil saturation, $T_{2B,O}$ is the bulk spin-spin relaxation time of the oil phase, $A_{O2}$ is the surface area of the pores that is in contact with the oil phase, $T_{2,O}(S_O=1)$ is the spin-spin relaxation time, $So=1$ represents that the rock is fully saturated with oil phase, $\rho_{2,O}$ is the spin-spin relaxivity of the oil phase and A is the internal surface area of the pores within the porous medium.

The NMR Wettability Index Modification Factor ($WIMF_O$) for the oil phase comparing an EOR process with a water flood (or imbibition) process (i.e. comparing a tertiary oil recovery process with a secondary oil recovery process) is defined as:

$$WIMF_O = \frac{\rho_{2,O2}A_{O2}}{\rho_{2,O1}A_{O1}} = \frac{\left[\frac{1}{T_{2,O}(Sor2)} - \frac{1}{T_{2B,O}}\right]S_{Or2}}{\left[\frac{1}{T_{2,O}(Sor1)} - \frac{1}{T_{2B,O}}\right]S_{Or1}} \qquad (33)$$

While the NMR wettability indices and wettability modification factors of equations (28) to (33) above have been defined in terms of the spin-spin relaxation time ($T_2$), it should be noted that they are also applicable to measurements of the spin-lattice relaxation time ($T_1$). When using $T_1$ instead of $T_2$, $\rho_1$ must be used instead of $\rho_2$ in the equations.

Also, it should be noted that NMR measurements of relaxation times generally record a relaxation time distribution. As will be described later, it is the peak values (i.e. most common relaxation time) from the appropriate distributions which are entered into the equations set out above.

The present invention will now be described by reference to the following Figures and Examples.

Examples

General Laboratory Procedures

Experiments demonstrating the principles of the present invention were carried out in the laboratory.

Experiments may be carried out on laboratory-prepared samples designed to simulate reservoir rock, e.g. sandpacks, or core plug samples taken from the field.

When using core plug samples, it may be preferred to take a single core plug and then to divide this up into a plurality of shorter so-called "sister plugs". This will help to ensure that the plug samples used in a particular experiment are as similar as possible.

In general, the samples or core plugs must first be prepared and aged.

For instance, where the sample is a core plug, it may initially contain many substances within its pores, e.g. connate water, drilling mud, crude oil. If deemed necessary, the core plug sample is cleaned using a solvent to remove these substances.

Once the sample has been cleaned (if necessary), it is then saturated with an aqueous phase, which phase may be intended to simulate the connate water which may be found within a particular reservoir.

An oil phase is then added to the sample, displacing a portion of the aqueous phase to provide a desired aqueous phase to oil phase ratio. In the laboratory, it may be possible to control conditions such that the sum of the initial oil phase saturation level ($S_{oi}$) and the initial aqueous phase saturation level ($S_{wi}$) equals unity, i.e. $S_{oi} + S_{wi} = 1$. This means that the pores are completely full and only contain the two phases. In general, however, it is more probable that $S_{oi} + S_{wi}$ will be slightly less than unity, since other phases such as air may be present in small amounts within the pores.

The initial oil phase saturation level ($S_{oi}$) will be selected to replicate the conditions likely to be found within a reservoir. For instance, oil may be added to the sample in the required amount to give an initial oil saturation level of from 0.4 to 0.9. The initial oil saturation level may be, for example, about 0.4, 0.5, 0.6, 0.7, 0.8 or 0.9.

The sample is then allowed to age to allow the fluid, i.e. the aqueous phase and the oil phase to redistribute themselves within the pores of the sample until an equilibrium distribution is reached.

For instance, it will be appreciated that when the sample is saturated with aqueous phase (i.e. before any oil is added), the aqueous phase will occupy the entire pore volume of the sample. Considering a single pore, when oil is added to the sample, initially the oil phase will generally displace aqueous phase from the bulk region of the pore. Aqueous phase will remain in contact with the pore surfaces. During ageing the oil phase and aqueous phase will redistribute within the pore, e.g. such that a portion of the pore surface is contacted by oil phase. Accordingly, after aging, the pore will be in a mixed wettability state.

Wettability controls the fluid distribution in a reservoir and therefore exerts a fundamental influence on flow behaviours, residual oil saturation and relative permeability. Accordingly, wettability also has a fundamental influence on reservoir performance. Therefore, it is most desirable that the wettability distribution within a test sample is representative of the reservoir.

Accordingly, it is important that the ageing process is allowed to run its course before a sample is used in any subsequent experiments. If ageing is not complete or is not substantially complete, then any predictions based on the results of such subsequent experiments may be prone to a higher degree of error, since the sample will not closely replicate reservoir conditions.

Complete or sufficient ageing of a sample may take a long time, for instance sometimes of the order of several weeks or even months.

By taking regular $T_2$ distribution measurements, the ageing process may be monitored. For example, $T_2$ distribution measurements may be taken every day or every few days.

The $T_2$ distribution will change as the phases redistribute between the pores, e.g. as more oil contacts the pore surfaces. When the sample has aged sufficiently or completely, the $T_2$ distribution will no longer change significantly from taking one measurement to the next. Conveniently, the ageing process can be tracked by observing and plotting the trend in the logarithmic mean of the $T_2$ distribution, which will tend to settle at or around a particular value towards the end of the ageing process.

Where test samples are obtained from core samples, reservoir wettability may be restored by cleaning the or each core sample with a solvent, followed by acquisition of representative initial oil and water saturation, and ageing (e.g. by soaking) in crude oil for a period of time to re-establish reservoir wettability.

Imbibition (oil displacement) experiments may be carried out on the test samples. These may be forced imbibition experiments or spontaneous imbibition experiments.

The various $T_2$ relaxation time measurements may be taken using a Carr-Purcell-Meiboom-Gill (CPMG) pulse sequence with an echo time of 0.2 ms, and a resonance frequency of 2 MHz. The obtained CPMG data may be inverted to a T2 relaxation time distribution using an inverse Laplace transformation algorithm.

Porous Plate Experiments

Example 1

A porous plate experiment was carried out for two rock core plugs, #156 and #157, with air displacing water, where $\theta = 0$, and $\sigma = 72mN/m$. The applied pressure was 182 psi (i.e., Pc = 182 psi ($1.25MN/m^2$)), which corresponds to a threshold capillary radius ($R_t$) of 0.11 $\mu m$, determined using Equation (8). The measured overall initial water saturation was 0.2. Using the cylindrical pore throat and spherical pore body model to match the determined initial water saturation of 0.2 with $\rho_{2,w} = 26.1$ $\mu m/s$, and $T_{2t} = 1463$ $\mu s$, and BTR = 1.5, and combining this model with $T_2$ relaxation time distributions at different saturation conditions, the fluid distributions and wettability index distributions were determined.

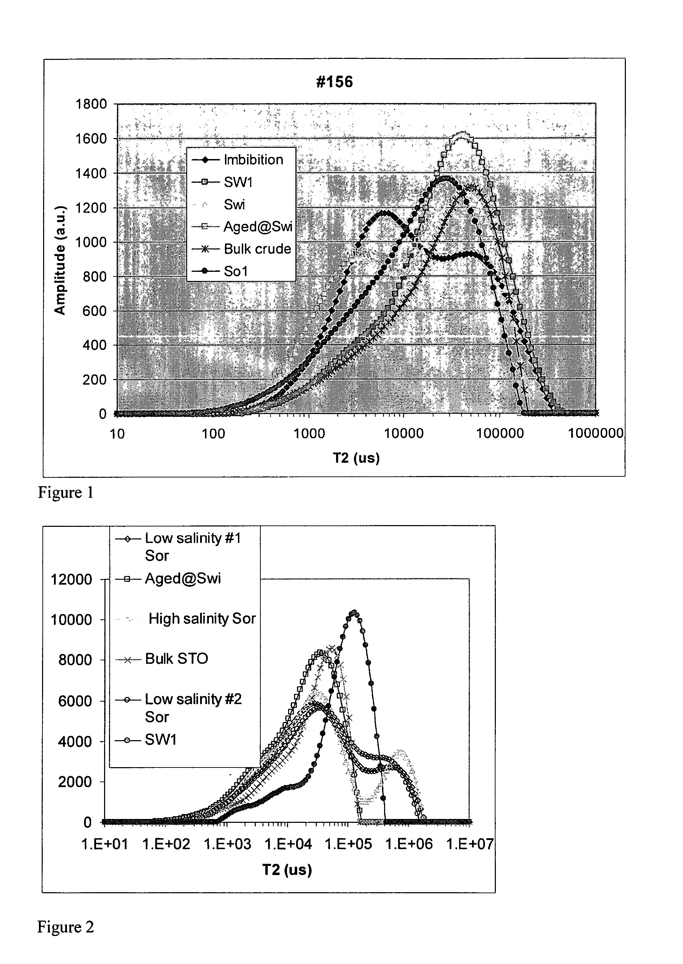

Figure 1 shows the $T_2$ relaxation time distributions at initial water and oil saturation before ageing (A) and after ageing (B) for rock core plug #156. The results presented in Figure 1 show that $T_2$ relaxation time distributions were almost unchanged for $T_2$ relaxation time components less than 2521 $\mu s$, these components reflect $T_2$ relaxation time distributions of initial water and oil in small pores which remain strongly water wet with a wettability index of the oil phase of zero after ageing. Applying a $T_2$ relaxation time cut-off of 2521 $\mu s$ to the $T_2$ relaxation time distribution at initial water and oil saturation before ageing, the total initial water saturation was determined as 0.214 PV (pore volume). Before ageing, the initial oil phase did not contact the rock grain surface and remained as the non-wetting phase and therefore displayed bulk relaxation characteristics in the rock.

Applying a $T_2$ relaxation time cut-off of 2521 $\mu$s to the $T_2$ relaxation time distribution of bulk crude oil, the pore volume ratio of initial oil phase in the small pores to the total initial oil phase was determined to be 0.093, which gives the amount of initial water phase completely covering the surface of a pore wall as 0.14 PV. In addition, in the small pores, there is 0.074 PV of initial oil phase not in contact with the pore wall surface after ageing. Applying the determined initial oil saturation of 0.074 PV in the small pores to the oil phase volume distribution as a function of pore size, a cut-off value of pore radius, $r_c$, of 1 $\mu$m was determined. This gave a boundary condition achieving a contact angle ($\theta$) of zero, as well as a wettability index of the oil phase (WIoi) of zero and a wettability index of the water phase (WIwi) of 1, for a pore radius less than 1$\mu$m, i.e., $\theta=0$, and WIoi=0, and WIwi=1 for $r<r_c$.

Further analysis of the $T_2$ relaxation time distributions before and after ageing for the large pores showed that the $T_2$ relaxation time distribution of the aged rock sample became shorter than the un-aged rock sample. This arises because the oil phase contacts the surface of the pore walls and results in a wettability alteration in the large pores. In the large pores with a $T_2$ relaxation time distribution longer than 2521 $\mu$s, the aging process shifts the $T_2$ relaxation time distribution to the left hand side, with a similar scale, whilst retaining a similar shape. Therefore, the aging process in the large pores shifts the overall $T_2$ relaxation time distribution to shorter $T_2$ relaxation times. This can be approximately represented by a shift of the peak values of the $T_2$ relaxation time from 41884 $\mu$s to 31910 $\mu$s. This shift is employed in the equation for calculating the oil phase wettability index distribution as a function of pore size.

Figure 2 shows $T_2$ relaxation time distributions at initial water and oil saturation before ageing (A) and after ageing (B) for rock core plug 157. Figure 2 shows that the $T_2$ relaxation time distributions are substantially unchanged for $T_2$ relaxation time components less than 3309 $\mu$s. These components reflect $T_2$ relaxation time distributions of initial water and oil in small pores that remain strongly water-wet with a wettability index of the oil phase of zero after ageing. Applying a $T_2$ relaxation time cut-off of 3309 $\mu$s to the $T_2$ relaxation time distribution at initial water and oil saturation before ageing, the total initial water saturation in the small pores was determined to be 0.2524 PV (pore volume). Before ageing, the initial oil phase does not contact the rock grain surface and remains as a non-wetting phase, and thus the oil phase behaves as the bulk material in the rock showing the bulk oil relaxation characteristics.

Applying a $T_2$ relaxation time cut-off of 3309 $\mu$s to the $T_2$ relaxation time distribution of bulk crude oil, the pore volume ratio of the initial oil phase in the small pores to the total initial oil phase was determined as 0.1189. This gave an initial water phase which completely covered the surface of the pore walls having a volume 0.1586 PV. Moreover, the initial oil phase that was not in contact with pore wall surface after ageing in the small pores had a volume of 0.0938 PV. Thus these pores remained strongly water wet after ageing. Applying the determined initial oil saturation of 0.0938 PV determined in the small pores to the oil phase volume distribution as a function of pore size, a cut-off value for the pore radius $r_c$ of 1 $\mu$m was determined. This gave boundary conditions for a contact angle ($\theta$) of zero together with a wettability index of the oil phase (WIoi) of zero and a wettability index of the water phase (WIwi) of 1, to be achieved for a pore radius less than 1um, i.e., $\theta=0$, and WIoi=0, and WIwi=1 for $r<r_c$.

Further analysis of the $T_2$ relaxation time distributions before and after ageing for large pores showed that the $T_2$ relaxation time distribution of aged rock samples becomes shorter than un-aged rock samples. This arises owing to the oil phase contacting the surface of the pore walls which results in a wettability alteration in the large pores. In the large pores with $T_2$ relaxation time distributions longer than 2521$\mu$s, the $T_2$ relaxation time distribution shifted to the left on ageing, but remained of a similar shape. Therefore the overall scale of the $T_2$ relaxation time distribution shifted to shorter $T_2$ relaxation times (on ageing in the large pores). This can be approximately represented by the shifting of the peak values of $T_2$ relaxation time from 50210$\mu$s to 38254$\mu$s. This shift in the peak values of the T2 relaxation time was used in the equation for calculating the oil phase wettability index distribution as a function of pore size.

Sandpack Experiments

Example 2

In a first experiment two sandpacks, #110, 210, that were intended to simulate a porous rock formation, were prepared by initially saturating the sand in brine, and partially drying the sand to remove excess brine. The sand/brine was then mixed with oil to a known weight of oil, brine and sand. Excess oil and/or brine was removed from the surface of each sandpack. The two sandpacks were then aged. The two sandpacks were prepared so as to be as similar as possible.

After ageing, one of the sandpacks was intended to be subjected to brine imbibition to produce oil therefrom, while the other was intended to be subjected to an MEOR process.

Initial NMR measurements of the $T_2$ distribution for the fluid within each aged sandpack were carried out.

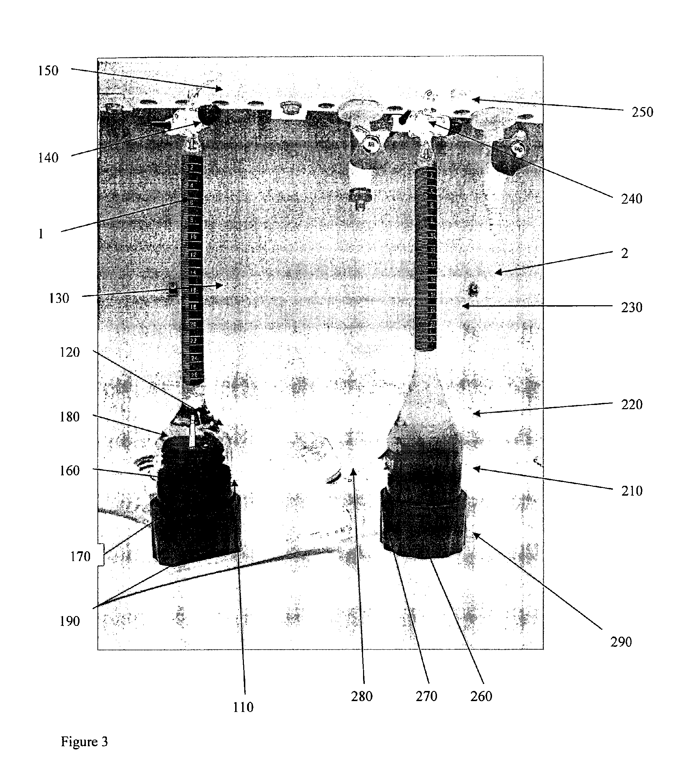

Figure 3 shows an experimental set-up, in which the two sandpacks, #110, 210 are housed each within a similar apparatus, the two apparatus 1, 2 being positioned side by side.

The first set of apparatus 1 comprises a base 190 in threaded engagement with a vessel 120 and a sandpack 110, the sandpack 110 being located on the base 190 and within the vessel 120. Extending upwardly from the vessel 120 in a substantially vertical direction is an elongate tube 130, which tube 130 is in fluid communication with the internal volume of the vessel 120. The tube 130 is provided at its top end with a tap 140 for controlling the passage of fluid from the tube 130 to an opening 150 located beyond the tap 140. The tube 130 and vessel 120 are both made from glass. The tube 130 is provided on its outside with markings for assessing the amount or level of a fluid contained therein.

Also, extending outwardly from a side wall of the vessel 120 is an inlet tube 160 which provides fluid communication with the internal volume of the vessel 120. The inlet tube 160 is connected to a fluid supply line 170, which communicates with a source of fluid (not shown). The inlet tube 160 is provided with a tap 180 for controlling the flow of fluid from the fluid supply line 170 and into the vessel 120 through inlet tube 160.

The source of fluid comprises a container for a body of fluid. The fluid supply line 170 communicates with a lower portion of the container such that, in use, fluid is forced along the supply line 170 by the weight of the fluid in the container. In apparatus 1, the fluid comprises a simple brine solution.

The second set of apparatus 2 comprises a base 290 in threaded engagement with a vessel 220 and a sandpack 210, the sandpack 210 being located on the base 290 and within the vessel 220. Extending upwardly from the vessel 220 in a substantially vertical direction is an elongate tube 230, which tube 230 is in fluid communication with the internal volume of the vessel 220. The tube 230 is provided at its top end with a tap 240 for controlling the passage of fluid from the tube 230 to an opening 250 located beyond the tap 240. The tube 230 and vessel 220 are both made from glass. The tube 230 is provided on its outside with markings for assessing the amount or level of a fluid contained therein.

Also, extending outwardly from a side wall of the vessel 220 is an inlet tube 260 which provides fluid communication with the internal volume of the vessel 220. The inlet tube 260 is connected to a fluid supply line 270, which communicates with a source of fluid (not shown). The inlet tube 260 is provided with a tap 280 for controlling the flow of fluid from the fluid supply line 270 and into the vessel 220 through inlet tube 260.

The source of fluid comprises a container for a body of fluid. The fluid supply line 270 communicates with a lower portion of the container such that, in use, fluid is forced along the supply line 270 by the weight of the fluid in the container. In apparatus 2, the fluid comprises a brine solution in which is dissolved a microbe.

Sandpacks 110 and 210 were prepared as described above. Accordingly, it will be appreciated that the sandpacks 110, 210 are aged prior to being included in the experimental apparatus. Hence, sandpacks 110, 210 contain a known volume of aqueous phase (brine) and oil phase (crude oil).

In the oil displacement experiment carried out in apparatus 1, taps 180 and 150 are initially open, as brine solution flows from the container into the vessel 120 via line 170. Once the resulting fluid level within tube 130 reaches a pre-determined height (typically close to the top of the marks on the outside of the tube 130), the taps 180, 150 are closed. Preferably, tap 180 is closed shortly before tap 150.

As the experiment progresses after the taps 180, 150 are closed, brine solution is imbibed into sandpack 110, thereby displacing crude oil. The volume of crude oil displaced is measured within the tube 130.

In the oil displacement experiment carried out in apparatus 2, taps 280 and 250 are initially open, with brine solution flowing from the container into the vessel 220 via line 270. Once the resulting fluid level within tube 230 reaches a pre-determined height (typically close to the top of the marks on the outside of the tube 230), the taps 280, 250 are closed. Preferably, tap 280 is closed shortly before tap 250.

As the experiment progresses after the taps 280, 250 are closed, brine solution is imbibed into sandpack 210, thereby displacing crude oil. The volume of crude oil displaced is measured within the tube 230.

It will be appreciated that the experiment carried out in apparatus 2 was exactly the same as that described above in respect of apparatus 1, except that the brine solution supplied along line 270 contained a microbe.

Differences in the volume of solution imbibed (oil displaced) and in the $T_2$ distribution profile between the two experiments may be attributed to the effects of the microbe on the interfacial activity, e.g. wettability, between the oil and the pore walls within the sandpack.

At the end of the oil displacement experiment, NMR $T_2$ relaxation time measurements were taken of the fluid remaining within the sandpacks.

The results for the two sandpacks were then compared.

Useful reference points for subsequent data analysis can be obtained by measuring $T_2$ relaxation time distributions for bulk sample of the oil and aqueous phases, a comparable porous sample which is 100% saturated with the aqueous phase and a comparable porous sample which is 100% saturated with the oil phase.

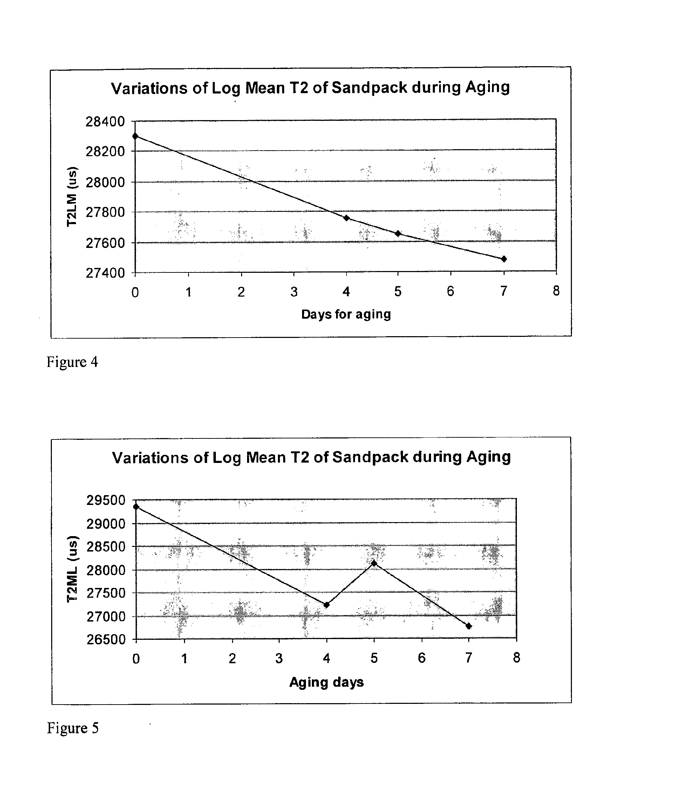

Figure 4 shows the variation of the logarithmic mean of $T_2$ spin-spin relaxation time ($T_2LM$, ($\mu$s)) for sandpack 110 during ageing (t, (days)). In Figure 4, the natural logarithmic mean of the spin-spin relaxation time for the fluid shows a downward trend. Four data points were measured over a period of seven days: the first data point was taken at an ageing time of zero days; the second was taken after an ageing time of four days; the third after five days; and the fourth after seven days.

Figure 5 shows the variation of the logarithmic mean of $T_2$ spin-spin relaxation time ($T_2LM$, ($\mu$s)) for sandpack

210 during ageing (t, (days)). As in Figure 4, there is a general downward trend over the ageing period. However, it will be noted that there was an increase in the value of the logarithmic mean of the spin-spin relaxation time between days four and five of the ageing process. This increase is most likely a reflection of the fact that the relaxation time may reflect opposing tendencies. For instance, in the case of the increase observed during the ageing process shown in Figure 5, this may have been caused by a period of relative dominance of an increase of the relaxation time of the brine phase over a decrease in the relaxation time of the oil phase. Hence, it will be appreciated that the change in logarithmic mean relaxation time during ageing will not necessarily trace a smooth or continuous line or curve.

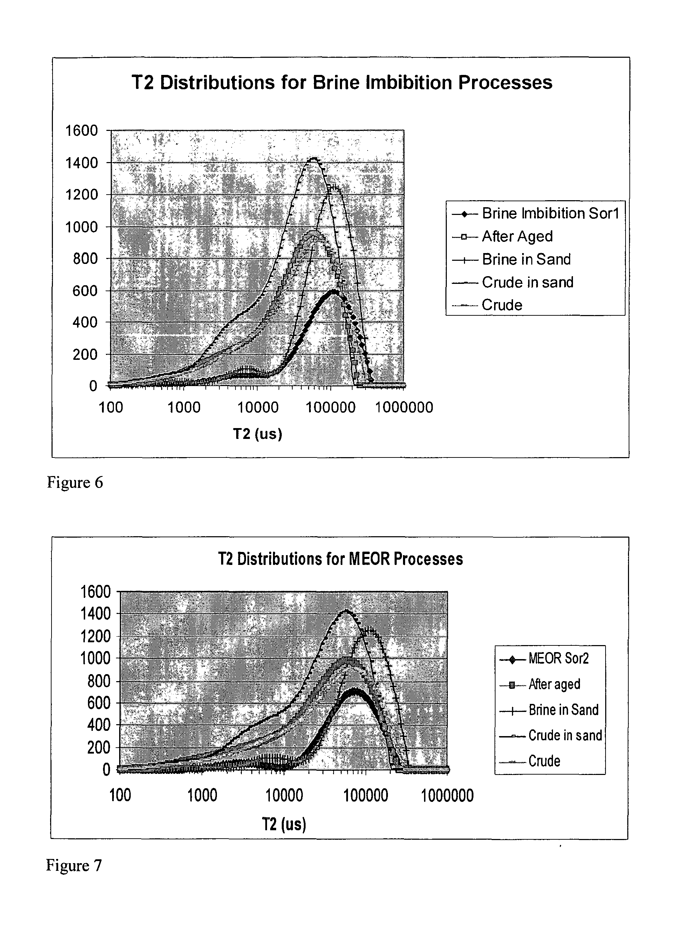

Figure 6 shows the $T_2$ distributions ($\mu$s) for a number of samples, namely: (A) sandpack 110 at residual oil saturation after brine imbibition; (B) sandpack 110 after ageing but before brine imbibition; (C) a comparable sandpack sample 100% saturated with aqueous phase; (D) a comparable sandpack sample 100% saturated with oil phase; and (E) a sample of bulk oil phase.

Samples (C), (D) and (E) represent useful points of reference for subsequent data analysis. Often, it will also be useful to obtain $T_2$ relaxation time data for a bulk sample of the aqueous phase.

The distribution curves do not lie on top of each other. In particular, it may be noted that the peak of the curve for brine imbibition occurs at a higher relaxation time than the peak of the curve for the sandpack after ageing and before brine imbibition. This is because the brine imbibition displaces oil from the sandpack. Accordingly, the pores become more water wet.

Figure 7 is similar to Figure 6 but shows data from an MEOR experiment. Accordingly, Figure 7 shows the $T_2$ distributions ($\mu$s) for the following samples: (A) sandpack 210 at residual oil saturation after MEOR imbibition; (B) sandpack 210 after ageing but before MEOR imbibition; (C) a comparable sandpack sample 100% saturated with aqueous phase; (D) a comparable sandpack sample 100% saturated with oil phase; and (E) a sample of bulk oil phase.

Again, the distribution curves do not lie on top of each other. In particular, it may be noted that the peak of the curve for MEOR imbibition occurs at a higher relaxation time than the peak of the curve for the sandpack after ageing and before brine imbibition.

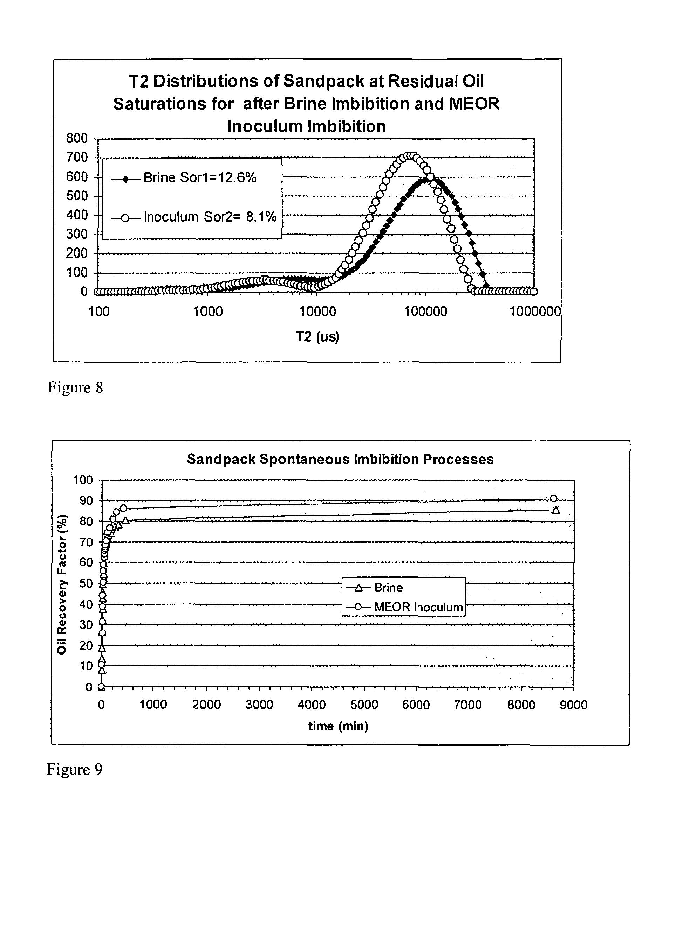

In Figure 8, the $T_2$ distribution curves for residual oil saturation from Figures 6 and 7 are presented on the same axes. The $T_2$ distributions for the first sandpack 110 after brine imbibition (A) and the second sandpack 210 after MEOR (B) can therefore be compared. The residual oil saturation ($S_{or1}$)) for the first sandpack was found to be 12.6% and the residual oil saturation ($S_{or2}$) for the second sandpack was found to be 8.1 %. As can clearly be seen, the two curves do not lie on top of each other. Rather, the curve (B) for the MEOR experiment (e.g. sandpack 210) is shifted towards shorter relaxation times as compared with the curve (A) for the brine experiment (e.g. sandpack 110). In particular, the peak relaxation time for the MEOR experiment is shifted to a shorter time than for the brine experiment. This may be owing to a stronger interaction between the water phase and the pore wall, i.e. increased wettability for the water phase, after the MEOR process has released at least a portion of the oil that would have been adhering to the pore walls and which would not have been displaced by the brine imbibition process.

Figure 9 serves to demonstrate the improved oil recovery that was achieved from sandpack 210 using the MEOR process (B) as compared with from sandpack 110 via brine imbibition (A). Figure 9 shows a quantity called the oil recovery factor plotted against time (t, (minutes)), the oil recovery factor being a measure of the proportion (expressed as a percentage) of the oil within the sandpack prior to imbibition (a known amount since the oil was added during sample preparation) that has been displaced from the sandpack during imbibition. The amount of oil displaced is measured by recording the volume of oil within the tubes 130 and 230 of apparatuses 1 and 2 respectively.

As can be seen, initially the rate of oil recovery from the sandpacks rose relatively quickly before flattening out to a much slower rate from around 500 minutes onwards. After the initial period during which the rate of oil recovery is relatively fast, the oil recovery factor for the MEOR experiment (sandpack 210) is consistently higher at any given time than for the brine experiment (sandpack 110). A reading taken after more than 8500 minutes recorded "final" oil recovery factors of 85.5% and 90.6% for brine imbibition (sandpack 110) and MEOR (sandpack 210) respectively.

Table 1 below shows the peak values from spin-spin relaxation time distributions at different saturation conditions for the brine imbibition process carried out on sandpack 110.

**Table 1**

| $T_{2B,W2}$ (ms) | $T_{2B,O}$ (ms) | $T_{2,W}$(Sw=1) (ms) | $T_{2,O}$(So=1) (ms) | $T_{2W}$(Sor1) (ms) | Sw1 | $T_{2,O}$(Soi) (ms) | Soi |
|---|---|---|---|---|---|---|---|
| 2297.8 | 68.335 | 113.532 | 54.974 | 113.532 | 0.874 | 59.109 | 0.869 |

$T_{2B,W2}$ is the peak relaxation time for a sample of bulk aqueous phase. $T_{2B,O}$ is the peak relaxation time for a sample of bulk oil phase. $T_{2,W(SW=1)}$ is the peak relaxation time for a comparable sandpack saturated with the aqueous phase. $T_{2,O(So=1)}$ is the peak relaxation time for a comparable sandpack saturated with the oil phase. $T_{2W(Sor1)}$ is the peak relaxation time measured after completion of the brine imbibition (oil displacement) experiment conducted sandpack 110 in apparatus 1. $T_{2,O(Soi)}$ is the peak relaxation time measured after sandpack 110 was aged.

$S_{W1}$ is the final water saturation level within the sandpack 110 at the end of the oil displacement (brine imbibition) experiment conducted in apparatus 1. $S_{oi}$ is the initial oil saturation level in the aged sandpack 110.

$S_{W1}$ can be calculated from $S_{oi}$ and the oil recovery factor, since So, is known for a given laboratory-prepared sample and the oil recovery factor is determined by experiment. For instance, consider a sandpack prepared such that $S_{oi}$, $+ S_{wi} = 1$, where $S_{oi} = 0.7$ and $S_{wi} = 0.3$, which sandpack is then subjected to an oil recovery experiment which returns an oil recovery factor of 80%. In this case, the residual oil saturation level will be 0.14, i.e. 20% of $S_{oi}$, and the residual aqueous phase saturation level will be 0.86.

The values shown in Table 1 may be inserted into the equations set out above, in order to calculate the desired wettability indices.

For instance, by inserting the numbers into equation (24), it is found that the oil phase wettability index at initial oil saturation condition for sandpack 110 is $WI_{oi} = 0.56$.

Similarly, according to equation (28), it is calculated that the water phase wettability index at residual oil saturation (Sor1) condition after brine imbibition process is $WI_w = 0.87$.

Table 2 below shows the equivalent data to Table 1, but in respect of the MEOR process carried out on sandpack 210.

**Table 2**

| $T_{2B,W2}$ (ms) | $T_{28,O}$ (ms) | $T_{2,W}(Sw=1)$ (ms) | $T_{2,O}(So=1)$ (ms) | $T_{2w}(Sor2)$ (ms) | Sw2 | $T_{2,O}(Soi)$ (ms) | Soi |
|---|---|---|---|---|---|---|---|
| 2249.7 | 68.335 | 113.532 | 54.974 | 73.475 | 0.919 | 59.109 | 0.865 |

$T_{2B,W2}$ is the peak relaxation time for a sample of bulk aqueous phase. $T_{2B,O}$ is the peak relaxation time for a sample of bulk oil phase. $T_{2,W(SW=1)}$ is the peak relaxation time for a comparable sandpack saturated with the aqueous phase. $T_{2,O(So=1)}$ is the peak relaxation time for a comparable sandpack saturated with the oil phase. $T_{2W(Sor2)}$ is the peak relaxation time measured after completion of the brine imbibition (oil displacement) experiment conducted on sandpack 210 in apparatus 2. $T_{2,O(Soi)}$ is the peak relaxation time measured after sandpack 210 was aged.

$S_{W2}$ is the final water saturation level within the sandpack 110 at the end of the oil displacement (MEOR) experiment conducted on sandpack 210 in apparatus 2. $S_{oi}$ is the initial oil saturation level in the aged sandpack 210. $S_{W2}$ may be calculated in a similar manner to $S_{W1}$.

The values shown in Table 2 may be inserted into the equations set out above, in order to calculate the desired wettability indices.

In accordance with equation (24), it can be calculated that the oil phase wettability index at initial oil saturation condition for sandpack 210 is $WI_{oi} = 0.56$. It is noted that this is the same value as for sandpack 110 which would suggest that the two sandpack samples were comparably similar, as desired, prior to undergoing brine imbibition or MEOR as the case may be.

According to equation (29), it can be calculated that the water phase wettability index at residual oil saturation (Sor2) condition for sandpack 210 after MEOR process is $WI_{W,EOR} = 1.45$. This is a considerably higher value than for sandpack 110 after brine imbibition, which suggests that the porous medium (the sandpack) becomes relatively more water wet after the MEOR process, owing to the wettability modification effect of the MEOR processes.

Using these values and equation (30), it is possible to calculate the wettability index modification factor for the water phase owing to the MEOR process compared with brine imbibition as $WIMF_W = 1.66$. This suggests that the MEOR process results in very strong wettability modification to the water wetting state in comparison with the brine imbibition process.

Example 3

In this example, spontaneous imbibition experiments were carried out on three sister core plug samples. The experiments of Example 2 constituted forced imbibition experiments. In a spontaneous imbibition experiment, the prepared and aged sample is merely soaked or submerged in a body of fluid, which is drawn into the sample by capillary action to displace oil. The imbibed fluid is not supplied under pressure.

The permeability of the core plug samples was 158mD. The samples were prepared and aged to an initial aqueous phase saturation of 17.6% (i.e. $S_{wi} = 0.176$). The aqueous phase was a synthetic formation water. The oil phase was stock tank oil (STO).

The first of the three sister core plugs was subjected to a high salinity formation water flood. The total dissolved solids (TDS) content of the high salinity water was 33435 mg/1.

The second of the three sister core plugs was subjected to a low salinity brine #1 (secondary mode) water flood. The TDS content of the low salinity brine #1 was 3144mg/l.

The third of the three sister core plugs was subjected to a low salinity brine #2 (secondary mode) water flood. The TDS content of the low salinity brine #2 was 441 mg/1.

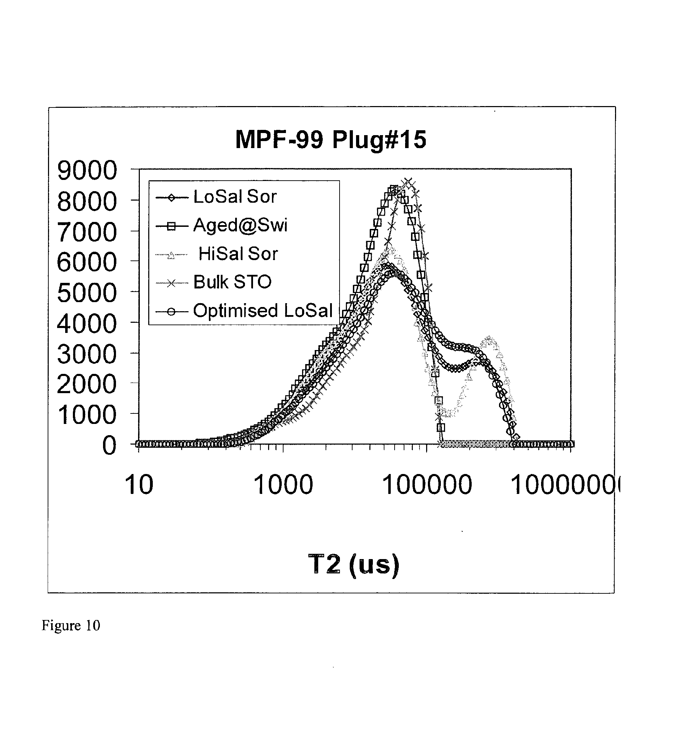

Figure 10 shows the $T_2$ relaxation time distributions for the following samples: (D) bulk STO; (B) one of the core plugs after ageing; (C) the first of the three sister core plugs after high salinity water flood; (A) the second of the three sister core plugs after low salinity brine #1 water flood; and (E) the third of the three sister core plugs after low salinity brine #2 water flood.

Figure 10 clearly shows that the main components of the $T_2$ relaxation time distribution of the aged sample with STO at Swi of 17.6% has been shifted to the left hand side in comparison with the $T_2$ relaxation time distribution of the bulk STO. This may be because of surface relaxation effects when oil phase is in contact with pore surfaces after ageing leading to wettability alteration.

The three $T_2$ relaxation time distributions for the three sister core plugs after their respective water floods show significant shape changes from the $T_2$ relaxation time distribution of the aged sample with significant reduction of oil peaks and the emergence of additional peaks on the right hand side. The new additional components have relaxation time values larger than the longest relaxation time value for bulk STO. These components, therefore, clearly result from the injection water and furthermore confirm the development of a mixed wetting state. Since significant parts of the pore surface have become covered by crude oil, the surface areas in contact with the injection water has been limited which results in a dramatic increase in the $T_2$ relaxation time for the injection water. The $T_2$ relaxation time for the injection water, however, is less than that of the bulk water owing to partial contact of the injection water with the pore surface. Further analysis of the $T_2$ distributions for the main components of the injection water clearly shows a decreasing trend of relaxation time with decreasing salinity of the injection water. This indicates wettability alteration, with a decreasing oil wet tendency as the salinity of the injection water is reduced. The lowest oil wet tendency is observed for the optimized low salinity water.

Using the definition of wettability index modification factor described previously, the change of wettability during different salinity oil recovery processes is analyzed quantitatively. Figure 10 shows that all the components of the $T_2$ relaxation time of bulk STO are less than 160ms. Therefore, after water flooding the components of the $T_2$ distribution longer than 160ms must arise from the water phase. Thus, the logarithmic mean values of relaxation time distributions longer than 160ms are calculated as $T_{2w}(Sorl)=580ms$, $T_{2w}(Sor2)=446ms$, $T_2(Sor3)=393ms$, for high salinity water flood, low salinity water flood, and optimised low salinity water flood, respectively. The bulk relaxation time for the water phase is $T_{2B,W}=2298ms$. By comparison with the high salinity water flood, the calculated water phase wettability index modification factors $(WIMF_w)$ are 1.79 and 2.39 for low salinity water flood and optimised low salinity water flood, respectively.

Example 4

In this example, spontaneous imbibition experiments were carried out on two sister core plug samples 57A, 57B.

The samples were prepared and aged to an initial aqueous phase saturation of 25.9% (i.e. $S_{wi} = 0.259$). The aqueous phase was a synthetic formation water. The oil phase was kerosene.

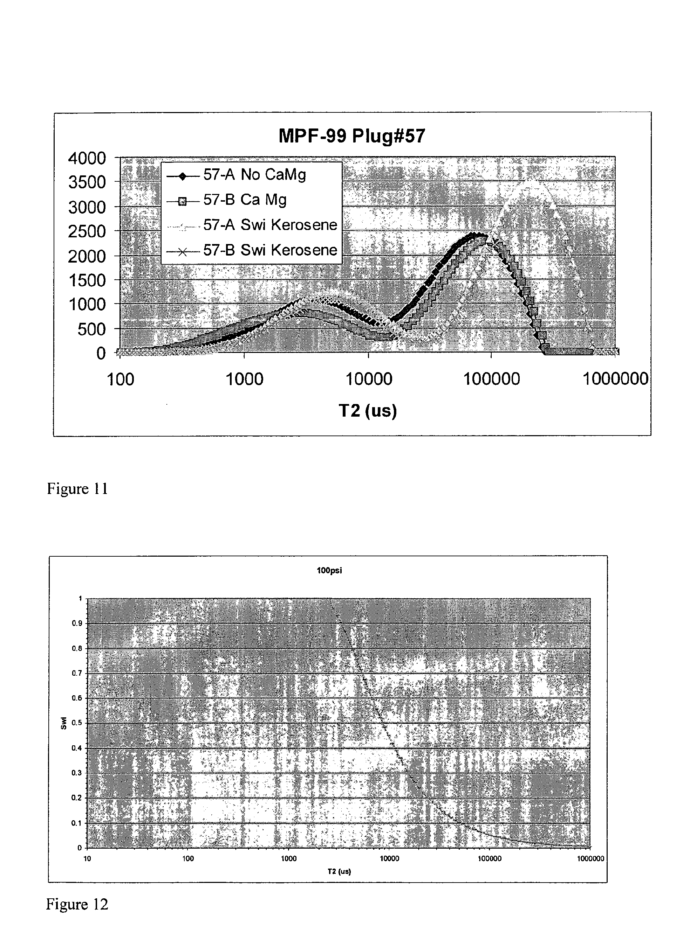

Figure 11 shows the $T_2$ relaxation time distributions ($\mu s$) for core plugs 57A and 57B after ageing (lines C and D respectively) and after oil recovery (lines A and B respectively).

The $T_2$ distributions after ageing for the two plugs 57A (line C), 57B (line D) are of very similar shape, indicating that the plugs have similar rock properties. Also, it should be noted that the $T_2$ distributions suggest that the core plug samples have maintained an water wet state during ageing. This is because kerosene, unlike crude oil, does not contain any polar components (e.g. asphaltene). Such polar components can be influential in altering wettability. Corroboration of this comes from the $T_2$ distributions for the aged core plugs 57A, 57B, in which the left hand peak may be attributed to an initial aqueous phase saturation of 25.9% and the right hand peak may be attributed to an initial kerosene saturation of 74.1 %.

Figure 11 also shows $T_2$ relaxation time distributions for core plugs 57A (line A) and 57B (line B) after oil displacement, using injection waters of different salinity levels.

Example 5

In this example, three sister core plugs were employed having a porosity of approximately 30% and permeability of approximately 130mD. NMR $T_2$ relaxation time distributions were obtained at 100% formation water saturation (SW1), at 100% crude oil saturation (Sol), at residual oil saturation after MEOR core flooding at reservoir conditions, and subsequent to 47 days diffusion of the core plug in a deuterium oxide ($D_2O$) reservoir to obtain the relaxation time distribution of the oil phase only at residual oil saturation conditions after the MEOR process at reservoir conditions. The

NMR $T_2$ relaxation time distributions were also obtained for a bulk crude oil sample.

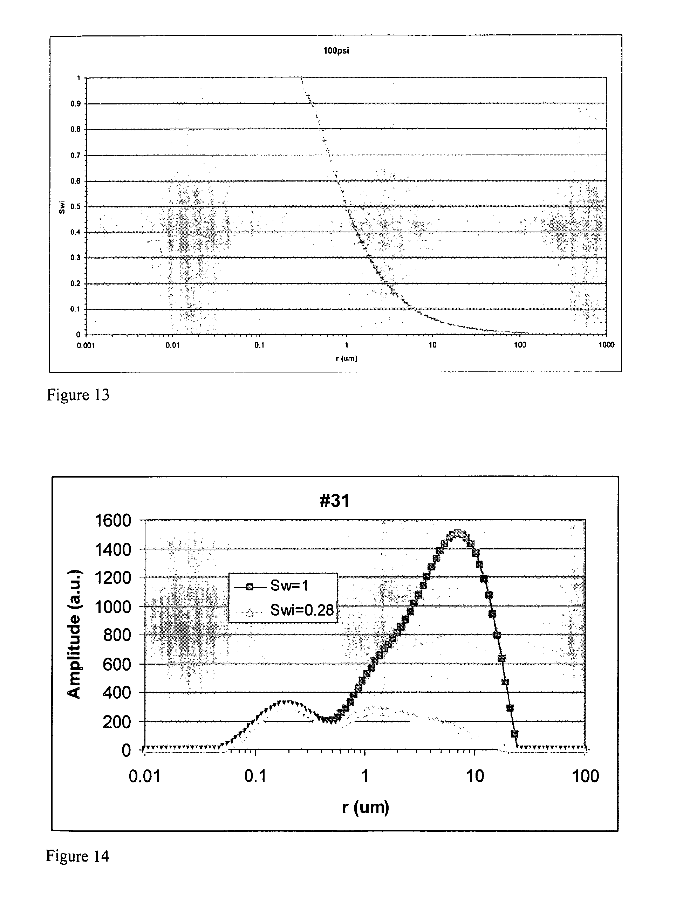

A pore body and throat model was used for initial water saturation as a function of $T_2$ relaxation time (shown in Figure 12) and pore size (shown in Figure 13) for the MEOR core plugs at a capillary pressure of 100psi (689N/m$^2$). The water volume distribution is shown in Figure 14 as a function of pore size at (A) 100% water saturated condition (Sw=1) and at (B) irreducible water saturation (Swi=0.28). The initial water saturation in oil non-invaded small pores (Swis) determined using the pore body and throat model is 0.097 which is consistent with the total water saturation of a small peak at the left hand side of the $T_2$ relaxation time distribution of a fully water saturated core plug.

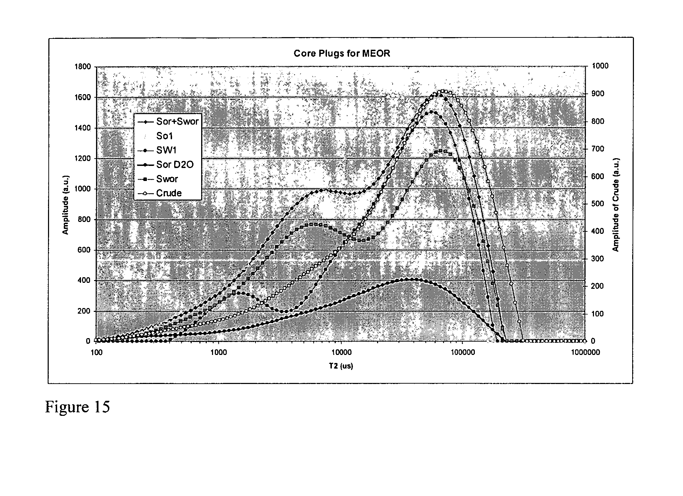

Figure 15 shows the $T_2$ relaxation time distributions of bulk crude oil (E) and core plugs before and after an MEOR core flood at reservoir conditions and after diffusion for 47 days in a large deuterium oxide ($D_2O$ reservoir (D) at MEOR residual oil saturation (Sor) conditions. The deuterium oxide ($D_2O$) replaced water ($H_2O$ that was originally present in the core plug to obtain the $T_2$ relaxation time distribution of the oil phase (Sor), as deuterium oxide ($D_2O$) cannot be detected with the low field NMR spectrometer. The relaxation time $T_2$ distribution of water phase (E) was determined by subtraction of residual oil phase signal from the $T_2$ relaxation time distributions.

Table 3 shows peak relaxation time $T_2$ values of $T_2$ distributions of bulk crude oil and core plugs at different saturation conditions before and after MEOR, as well as residual oil saturation ($S_{orL}$) and water saturation ($S_{wL}$) in oil invaded large pores during primary drainage.

**Table 3**

| $T_{2B,O}$ (mS) | $T_{2,W}$(Sw=1) (ms) | $T_{2,O}$(So=1) (ms) | $T_{2W}$(Sor) (ms) | $S_{wL}$ | $T_{2,O}$(Sor) (ms) | $S_{orL}$ |
|---|---|---|---|---|---|---|
| 68.335 | 54.974 | 26.619 | 60.19 | 0.732 | 38.934 | 0.268 |

After MEOR, the wettability index of large pores is 0.67 for the water phase, and 0.13 for the oil phase.

It will be appreciated that the NMR techniques according to this invention may be used to confirm or determine the relative effectiveness of oil recovery processes, in particular tertiary mode oil recovery processes, for particular reservoir rock types. As a consequence, it may be possible to select an optimum or most appropriate oil recovery process for a given reservoir.

While the preceding examples demonstrate the application of the methods of the invention within the laboratory, it is envisaged that the methods would also be usefully applicable outside the laboratory, e.g. in an oil field, where the measurement of wettability and/or changes therein would be desirable.

For instance, experiments could be carried out in the field in which downhole NMR logging may be used to obtain wettability data in the region of a hydrocarbon-bearing formation around a wellbore.

It may be necessary to work out the original oil saturation as a base for calculating an estimate of the amount of oil in place within a formation. Also, a saturation profile may be required.

It is envisaged that it would also be possible to assess the extent of any changes in the wettability characteristics of and/or damage to a given formation that may be caused by the drilling process using NMR.

During drilling of a well, a wellbore will typically be full of drilling fluid (also known as drilling mud). The drilling fluid may seep out of the wellbore and into the near wellbore region of the formation, which may in turn displace oil away from the wellbore.

Hence, it will be appreciated that the saturation conditions within the near wellbore region of the formation will vary with distance from the wellbore as a consequence of the infiltration of drilling fluid into the formation. For instance, owing to the infiltration of drilling fluid into the formation, the rock proximal to the wellbore may no longer have the original oil saturation level of the formation. By measuring the wettability characteristics of the near wellbore region using an NMR logging machine, it may be possible to determine the extent of the infiltration of the drilling mud by ascertaining at what distance from the wellbore, the rock has the original oil saturation level.

Hence, changes in wettability in the near wellbore area owing to the presence within the formation of drilling fluid can be compared.

Using an oil-based drilling mud with a surfactant may change the wettability conditions of the formation. Accordingly, it will be appreciated that the techniques of the present invention may be used to assess and/or compare the effects of different drilling fluids or muds on the wettability characteristics of the near wellbore region of a formation.

Similarly, comparative wettability tests could be carried out after a secondary mode oil recovery process, e.g. water (or brine) flood or a tertiary mode oil recovery process such as MEOR.

Also, it should be noted that NMR logging may be carried out in injection wells and/or production wells. In the case of an injection well, for instance, NMR logging may be used to measure relaxation times for the fluid in the near wellbore region. Hence, it is envisaged that it may be possible to ascertain how much oil has been left behind within the near wellbore region of the formation, e.g. after an EOR process such as a water flood or MEOR process.

It will be appreciated that proton ($^1$H) NMR may be particularly well suited for studies of porous media containing therein fluids comprising water and hydrocarbon phases. However, it is anticipated that other modes of NMR may be useful for investigating other mixed phase fluid systems in porous media and that the principles of this invention may be applicable when using such other modes of NMR spectroscopy.

**Claims**

1. A method of comparing a secondary oil recovery process with a tertiary oil recovery process, the secondary oil recovery process and the tertiary oil recovery process being applied to a substantially fluid-saturated porous medium containing an oil phase and an aqueous phase, the method comprising:

   (a) providing a first sample of the porous medium, the sample having within the pores thereof a known initial volume of the oil phase;
   (b) measuring a relaxation time for the fluid within the first sample;
   (c) subjecting the first sample to the secondary oil recovery process;
   (d) measuring a relaxation time for the fluid remaining within the first sample after the secondary oil recovery process;
   (e) providing a second sample of the porous medium, the second sample having within the pores thereof a substantially similar known initial volume of the oil phase;
   (f) measuring a relaxation time for the fluid within the second sample;
   (g) subjecting the second sample to the tertiary oil recovery process or, subsequent to step (d) and without carrying out steps (e) and (f), subjecting the first sample to the tertiary oil recovery process;
   (h) measuring a relaxation time for the fluid remaining within the second sample or first sample after the tertiary oil recovery process; and
   (i) using the relaxation time measurements in the calculation of a wettability index modification factor for the oil phase or the aqueous phase, thereby comparing the tertiary oil recovery process with the secondary oil recovery process.

2. A method as claimed in Claim 1 wherein the relaxation time measurements are made for the oil phase and/or the aqueous phase.

3. A method as claimed in Claims 1 or 2 wherein the substantially fluid saturated porous medium is a reservoir rock or a replica thereof, and contains an oil phase selected from a live crude oil and a stock tank crude oil that is associated with the reservoir rock and an aqueous phase selected from a connate water and a formation water that is associated with the reservoir rock.

4. A method as claimed in any one of the preceding claims wherein the secondary oil recovery process comprises a waterflood and/or brine imbibition that utilizes a brine solution selected from seawater, brackish water, an aquifer water, a produced water, a connate water, a formation water and laboratory-prepared replicas thereof.

5. A method as claimed in Claim 4 wherein the brine solution contains a microbe selected from bacillus, clostridia, pseudomonas, hydrocarbon degrading bacteria, and denitrifying bacteria.

6. A method as claimed in Claim 4 wherein the brine solution is a low salinity water having a total dissolved solids content in the range of 500 to 5000 ppm and a ratio of the multivalent cation content of the low salinity water to the multivalent cation content of the connate water or formation water of less than 1, preferably, less than 0.9.

7. A method as claimed in any one of the preceding claims wherein the relaxation time measurements are spin-spin (transverse) relaxation time ($T_2$) made using NMR spectroscopy.

8. A method as claimed in any one of the preceding claims wherein the measurements are normalized by reference to relaxation time measurements made on a sample of the porous medium that is saturated with a single water phase, and/or on a sample of the porous medium that is saturated with a single oil phase and/or on bulk samples of the aqueous phase and/or the oil phase.

9. A method of assessing a change in the wettability of a porous and permeable hydrocarbon-bearing formation in the region surrounding a wellbore that penetrates the formation, the method comprising:

(i) locating an NMR spectrometer within the wellbore at a depth corresponding with an interval of the hydrocarbon-bearing formation;

(ii) measuring a relaxation time for the fluid located within the hydrocarbon-bearing formation;

(iii) optionally, removing the NMR spectrometer from the wellbore;

(iv) injecting a secondary or a tertiary recovery process fluid or an EOR process fluid into the hydrocarbon-bearing formation for a period of time such that a known pore volume or fractional pore volume of the fluid is injected into the formation;

(v) optionally shutting in the well for a period of time;

(vi) returning the well back to production and producing and optionally recovering the injected fluids;

(vii) after the injected fluids have been produced, if necessary, re-locating the NMR spectrometer within the wellbore at substantially the same depth as before; and

(viii) measuring a relaxation time for the fluid located within the hydrocarbon-bearing formation.

(ix) optionally repeating steps number (iv) to (viii) with a different recovery fluid to that used in step (iv) originally.

10. A method as claimed in Claim 9 wherein the method is repeated on one or more occasions to measure changes in the wettability characteristics of the formation before, during and/or after secondary and/or tertiary oil recovery processes.

11. A method as claimed in Claims 9 or 10 wherein the method is combined with a Single Well Chemical Tracer (SWCT) test wherein the secondary or tertiary recovery fluid that is injected into the hydrocarbon-bearing formation in step (iv) is an aqueous fluid that is divided into a minor portion and a major portion wherein the minor portion is labelled with a reactive chemical tracer that reacts with water to form a product tracer that is insoluble in the hydrocarbon phase of the formation and wherein:

in step (iv), the minor portion of aqueous fluid that is labelled with the reactive chemical tracer is injected into the formation before the major portion of aqueous fluid and the amount of the major portion of the aqueous fluid is sufficient to push the minor portion of aqueous fluid to a radial distance of at least 5 feet from the wellbore;

in step (v), the well is shut-in for a sufficient period of time for the reactive chemical tracer to react with water to form a detectable amount of the product tracer;

in step (vi), the aqueous fluid is back-produced from the hydrocarbon-bearing formation and is analyzed for the content of reactive chemical tracer and for the content of product tracer and the residual oil saturation is determined from the analyzed separation between the peak concentrations of the product tracer and reactive chemical tracer; and

the change in wettability index following the secondary or tertiary oil recovery process that is calculated using the relaxation time measurements determined in step (viii) is correlated with the residual oil saturation determined from the separation between the peak concentrations of product tracer and reactive tracer according to the SWCT test.

12. A method as claimed in Claim 11 wherein the reactive chemical tracer is ethyl acetate and the product tracer is ethanol.

13. A method of assessing a change in the wettability of a porous and permeable hydrocarbon-bearing formation in the region surrounding a new wellbore penetrating a hydrocarbon-bearing formation, the change being due, at least in part, to ingress of drilling mud into the formation, the method comprising:

(i) locating a pre-existing wellbore penetrating the hydrocarbon-bearing formation or a similar formation;

(ii) locating an NMR well logging tool within the pre-existing wellbore at a depth corresponding with a portion of the hydrocarbon-bearing formation;

(iii) measuring a relaxation time for the fluid located within the near wellbore region surrounding the pre-existing wellbore;

(iv) drilling a new wellbore at a new location removed from the pre-existing wellbore, whereby the new wellbore intersects the hydrocarbon-bearing formation;

(v) locating an NMR spectrometer within the new wellbore at a depth corresponding with a portion of the hydrocarbon-bearing formation;

(vi) measuring a relaxation time for the fluid located within the near wellbore region surrounding the new wellbore; and

(vii) comparing the relaxation time measurements from steps (c) and (f) to assess the change in the wettability of the fluid in the near wellbore region surrounding the new wellbore, the change being due, at least in part, to the ingress of drilling mud into the formation during drilling of the new wellbore.

Figure 1

Figure 2

Figure 3

Figure 4

Figure 5

Figure 6

Figure 7

Figure 8

Figure 9

Figure 10

Figure 11

Figure 12

Figure 13

Figure 14

Figure 15

Europäisches
Patentamt

European
Patent Office

Office européen
des brevets

# EUROPEAN SEARCH REPORT

Application Number

EP 09 25 2811

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 5 162 733 A (BALDWIN BERNARD A [US]) 10 November 1992 (1992-11-10) * column 1, line 17 - line 24 * * column 1, line 43 - column 2, line 15 * * column 5, line 24 - line 50 * * column 6, line 51 - column 7, line 43 * * column 9, line 10 - line 30 * ----- | 1-8 | INV. G01V3/32 |
| A | US 2006/132131 A1 (FLEURY MARC [FR] ET AL) 22 June 2006 (2006-06-22) * paragraphs [0005], [0020] - [0028] * ----- | 1-8 | |
| A | HSU W., LI X., FLUMERFELT R.W.: "Wettability of Porous Media by NMR Relaxation Methods" SOCIETY OF PETROLEUM ENGINEERS, SPE, no. SPE24761, 4 October 1992 (1992-10-04), - 7 October 1992 (1992-10-07) pages 1027-1037, XP002582762 page 1027, Introduction page 1028; "Wettability and NMR Relaxation" page 1030; "Amott/USBM Method" ----- | 1-8 | TECHNICAL FIELDS SEARCHED (IPC)<br><br>G01V<br>G01R |
| A | LOOYESTIJN W., HOFMAN J.: "Wettability Index Determination by Nuclear Magnetic Resonance" SOCIETY OF PETROLEUM ENGINEERS, SPE, no. SPE93624, 12 March 2005 (2005-03-12), - 15 March 2005 (2005-03-15) pages 1-8, XP002582763 page 1,2; Wettability determination page 2; Concept and Application of a NMR Wettability Index page 4; Inversion of forward model page 5; Implementation for laboratory measurements ----- -/-- | 1-8 | |

The present search report has been drawn up for all claims

| Place of search | Date of completion of the search | Examiner |
|---|---|---|
| Munich | 19 May 2010 | Schneiderbauer, K |

EPO FORM 1503 03.82 (P04C01)

Europäisches
Patentamt

European
Patent Office

Office européen
des brevets

**EUROPEAN SEARCH REPORT**

Application Number

EP 09 25 2811

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | FREEDMAN R., HEATON N., FLAUM M., HIRASAKI G.J., FLAUM C., HÜRLIMANN M: "Wettability, Saturation and Viscosity Using the Magnetic Resonance Fluid Characterization Method and New Diffusion-Editing Pulse Sequences" SOCIETY OF PETROLEUM ENGINEERS, SPE PROCEEDINGS, 2 September 2002 (2002-09-02), pages 613-625, XP9060685 page 2,3; Wettability page 5,6; Experiments ----- | 1-8 | |
| A | US 2006/116828 A1 (CHEN QUAN [CA] ET AL) 1 June 2006 (2006-06-01) * paragraphs [0005], [0213], [0214], [0215] * ----- | 1-8 | |
| | | | TECHNICAL FIELDS SEARCHED (IPC) |

~~The present search report has been drawn up for all claims~~

| Place of search | Date of completion of the search | Examiner |
|---|---|---|
| Munich | 19 May 2010 | Schneiderbauer, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**Application Number**

EP 09 25 2811

---

**CLAIMS INCURRING FEES**

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

**LACK OF UNITY OF INVENTION**

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-8

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 09 25 2811

The Search Division considers that the present European patent application does not comply with the
requirements of unity of invention and relates to several inventions or groups of inventions, namely:

    1. claims: 1-8

        In addition to the common concept (see below) invention I
        defines method steps to determine a wettability index
        modification factor which results from measurements of two
        rock samples.
               ---

    2. claims: 9-12

        In addition to the common concept (see below) invention II
        defines method steps of operating a downhole NMR
        spectrometer in a borehole.
               ---

    3. claim: 13

        In addition to the common concept (see below) invention III
        defines method steps to carry out wettability measurements
        in more than one borehole (one pre-existing and one
        reference borehole).
               ---

## ANNEX TO THE EUROPEAN SEARCH REPORT
## ON EUROPEAN PATENT APPLICATION NO.

EP 09 25 2811

This annex lists the patent family members relating to the patent documents cited in the above-mentioned European search report.
The members are as contained in the European Patent Office EDP file on
The European Patent Office is in no way liable for these particulars which are merely given for the purpose of information.

19-05-2010

| Patent document cited in search report | | Publication date | Patent family member(s) | | Publication date |
|---|---|---|---|---|---|
| US 5162733 | A | 10-11-1992 | NONE | | |
| US 2006132131 | A1 | 22-06-2006 | AU | 2003274261 A1 | 30-04-2004 |
| | | | EP | 1540363 A1 | 15-06-2005 |
| | | | FR | 2844355 A1 | 12-03-2004 |
| | | | WO | 2004025317 A1 | 25-03-2004 |
| US 2006116828 | A1 | 01-06-2006 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

• **DEANS, H.A. ; CARLISLE, C.T.** Single-Well Tracer Tests in Complex Pore Systems. *SPE/DOE 14886, presented at the Fifth Symposium on EOR Tulsa,* 20 April 1986